# EUROPEAN PATENT SPECIFICATION

(11) **EP 2 793 352 B1**
(45) Date of publication and mention of the grant of the patent: **03.02.2016**
(21) Application number: 12856950.6
(22) Date of filing: 10.09.2012
(51) Int. Cl.: H02J 7/35, G05F 1/67, H01M 10/44, H02J 3/32, H02M 7/48, H02M 7/493

(54) **POWER SUPPLY SYSTEM AND POWER CONDITIONER FOR CHARGING AND DISCHARGING**
STROMVERSORGUNGSSYSTEM UND INVERTER ZU DESSEN LADUNG UND ENTLADUNG
SYSTÈME D'ALIMENTATION EN COURANT ET CONDITIONNEUR DE COURANT DESTINÉ À UNE CHARGE ET À UNE DÉCHARGE

(30) Priority: 15.12.2011 JP 2011275024; 31.01.2012 JP 2012018159
(43) Date of publication of application: 22.10.2014
(73) Proprietor: Panasonic Intellectual Property Management Co., Ltd., Osaka 540-6207 (JP)
(72) Inventor: TAMURA, Hideki, Osaka-shi, Osaka 540-6207 (JP); KOSHIN, Hiroaki, Osaka-shi, Osaka 540-6207 (JP); KIDERA, Kazunori, Osaka-shi, Osaka 540-6207 (JP)
(74) Representative: Appelt, Christian W.
(86) International application number: PCT/JP2012/073051
(87) International publication number: WO 2013/088799

(56) References cited:
- EP-A1- 2 009 778
- EP-A1- 2 058 921
- JP-A- H11 127 546
- JP-A- H11 127 546
- JP-A- 2007 330 057
- JP-A- 2007 330 057
- JP-A- 2010 061 495
- JP-A- 2010 142 076
- JP-A- 2011 211 885
- JP-B1- 4 638 554
- JP-B1- 4 638 554
- US-A1- 2008 062 724
- US-A1- 2008 259 660

## Description

### TECHNICAL FIELD

The present invention relates to a power supply system configured to switch its operation between a grid connecting operation connected to a power grid and a grid independent operation, and also relates to a charging-discharging power conditioner therefor.

### BACKGROUND ART

There has been proposed a power supply system that includes a power conditioner including a power converter configured to convert DC power of a power generator such as a solar battery into AC power. The conventional power supply system can supply electric power to a load(s) from not only a power grid of a commercial power supply, but also the power conditioner (for example, see JP9-135577A; hereinafter, referred to as "Patent Document 1"). The system (dispersed power supply system) described in Patent Document 1 can switch its operation between a grid connecting operation in which the power conditioner coordinates with the power grid and a grid independent operation in which the power conditioner is disconnected from the power grid.

In the grid connecting operation, the power conditioner carries out conversion of output power of the solar battery into AC power by the power converter (an inverter), and supplies the AC power to a load(s) (grid-connected load). When the power conditioner cannot supply all the power required by the load in this operation, the shortfall-power can be compensated by the power grid of a commercial power supply. In a case of power outage or the like, the power conditioner is disconnected from the power grid to be switched into the grid independent operation, and to thereby carry out conversion of the generated power of the solar battery into AC power by the power converter, and supplies the AC power to a load(s) (grid-independent load).

Incidentally, power conditioners generally have a preset maximum output power (e.g., 1.5 kVA) for the grid independent operation. Therefore, a load (grid-independent load) which can be powered by the power conditioner under the grid independent operation should be restricted so that power consumption of the load is equal to or less than the maximum output power of the power conditioner. This limits freedom of choice of loads. In addition, even in a case where power consumption of a load is equal to or less than a maximum output power of a power conditioner, there is a possibility that generating power of the solar battery may be lowered less than the power consumption of the load (the generating power < the power consumption) owing to decreased solar radiation, which causes the power conditioner to stop outputting electric power.

EP 2 058 921 A1 describes a power conditioner in a system having three power sources: a DC power source such as a solar cell, an accumulating unit such as an accumulator, and a commercial power system. The power conditioner comprises a power converting circuit for converting DC power obtained from a DC power source to AC power of a commercial power system; a charger/discharger circuit for charging the DC power obtained from the DC power source to an accumulator or discharging the DC power stored in the accumulator; a control circuit for controlling the power converting circuit and the charger/discharger circuit; a first power source circuit for supplying power from the DC power source to the control circuit; a second power source circuit for supplying power from the accumulator to the control circuit; a third power source circuit for supplying power from the commercial power system to the control circuit; and a power source selecting circuit for selecting at least one of the first, second, and third power source circuits and supplying power to the control circuit.

EP 2 009 778 A1 describes a grid-connected power conditioner connected with a DC power supply source for generating electric power, a power storage unit and a commercial power system, comprising: a first voltage converting unit converting a voltage of DC power supplied from said DC power supply source to a first DC voltage and outputting said first DC voltage to DC positive and negative buses; an inverter circuit receiving said first DC voltage from said DC positive and negative buses, and converting said first DC voltage to an AC voltage and outputting the AC voltage to said commercial power system; and a second volt-age converting unit, connected between said power storage unit and said DC positive and negative buses, for converting said first DC voltage received from said DC positive and negative buses to a second DC voltage and supplying the second DC voltage to said power storage unit during a charging operation of said power storage unit, and converting said second DC voltage received from said power storage unit into said first DC voltage and outputting said first DC voltage to said DC positive and negative buses during a discharging operation of said power storage unit.

### SUMMARY OF INVENTION

The present invention has been achieved in view of the above circumstances, and an object thereof is to provide a power supply system and a charging-discharging power conditioner which can continue supplying electric power to a load(s), even when the generating power of the solar battery is less than the power consumption of the load in a grid independent operation.

A power supply system according to the invention includes, inter alia, a generator power conditioner and a charging-discharging power conditioner. The generator power conditioner is configured to switch between a grid connecting operation and a grid independent operation. The generator power conditioner is configured to carry out power conversion of a solar battery and to coordinate with a power grid in the grid connecting operation. The generator power conditioner is configured to be disconnected from the power grid in the grid independent operation. The charging-discharging power conditioner is connected to a grid-independent feed line to which the generator power conditioner supplies electric power in the grid independent operation. The charging-discharging power conditioner includes: a charge-discharge circuit configured to charge and discharge a storage battery; a voltage sensor configured to sense a voltage of the grid-independent feed line; and a controller configured to control the charge-discharge circuit so as to maintain the sensed voltage by the voltage sensor at a predetermined target value in the grid independent operation. The controller is configured to control the charge-discharge circuit to: charge the storage battery by electric power supplied through the grid-independent feed line when the sensed voltage is greater than the target value; and supply electric power from the storage battery to the grid-independent feed line when the sensed voltage is smaller than the target value.

In other words, a power supply system according to the invention includes a feed line, a generator power conditioner, and a charging-discharging power conditioner. The feed line includes a grid-connected feed line connected to a power grid, and a grid-independent feed line disconnected from the power grid. The generator power conditioner is configured to switch between a grid connecting operation and a grid independent operation, where the generator power conditioner is configured to carry out power conversion of a solar battery to supply the converted power to the grid-connected feed line in the grid connecting operation, and the generator power conditioner is configured to be connected to the grid-independent feed line and also disconnected from the power grid in the grid independent operation. The charging-discharging power conditioner is connected to the grid-independent feed line. The charging-discharging power conditioner includes a charge-discharge circuit configured to charge and discharge a storage battery, a voltage sensor configured to sense a voltage of the grid-independent feed line, and a controller configured to control the charge-discharge circuit so as to maintain the sensed voltage by the voltage sensor at a predetermined target value in the grid independent operation. The controller is configured to control the charge-discharge circuit to: charge the storage battery by electric power supplied through the grid-independent feed line when the sensed voltage is greater than the target value; and supply electric power from the storage battery to the grid-independent feed line when the sensed voltage is smaller than the target value.

In the power supply system, preferably, the generator power conditioner is configured to perform, in the grid independent operation, a maximum power point tracking control for maximizing output power of the solar battery.

In the power supply system, preferably, the generator power conditioner is configured to perform, in the grid independent operation, a constant voltage control for maintaining an output voltage thereof to the grid-independent feed line at a first target value. The charging-discharging power conditioner is configured to control the charge-discharge circuit so as to maintain the sensed voltage by the voltage sensor at the target value, named as a second target value. The second target value is set smaller than the first target value.

In the power supply system, preferably, the target value has a predetermined range. The controller is configured to control the charge-discharge circuit to: charge the storage battery by electric power supplied through the grid-independent feed line when the sensed voltage is greater than an upper limit of the target value; supply electric power from the storage battery to the grid-independent feed line when the sensed voltage is smaller than a lower limit of the target value; and cause the charge-discharge circuit to stop when the sensed voltage is within the upper limit and the lower limit of the target value.

In the power supply system, preferably, the charging-discharging power conditioner is configured to stop the generator power conditioner outputting electric power to the grid-independent feed line when a remaining battery level of the storage battery is a predetermined upper limit value or more in the grid independent operation.

In the power supply system, preferably, the charging-discharging power conditioner further includes a selector configured to switch the target value between a first setting value and a second setting value.

In the power supply system, preferably, the selector is configured to automatically switch the target value between the first setting value and the second setting value in accordance with output from the generator power conditioner to the grid-independent feed line when the grid independent operation is started.

A charging-discharging power conditioner of the invention is adapted to be connected to a grid-independent feed line. The grid-independent feed line is configured to be connected to a generator power conditioner configured to switch between a grid connecting operation in which the generator power conditioner carries out power conversion of a solar battery and to coordinate with a power grid and a grid independent operation in which the generator power conditioner is to be disconnected from the power grid. The grid-independent feed line serves as a power supply line for the generator power conditioner in the grid independent operation. The charging-discharging power conditioner includes: a charge-discharge circuit configured to charge and discharge a storage battery; a voltage sensor configured to sense a voltage of the grid-independent feed line; and a controller configured to control the charge-discharge circuit so as to maintain the sensed voltage by the voltage sensor at a predetermined target value in the grid independent operation. The controller is configured to control the charge-discharge circuit to: charge the storage battery by electric power supplied through the grid-independent feed line when the sensed voltage is greater than the target value; and supply electric power from the storage battery to the grid-independent feed line when the sensed voltage is smaller than the target value.

In other words, a charging-discharging power conditioner of the invention is configured to operate in the power supply system of the invention, and is connected to a grid-independent feed line. The grid-independent feed line is included in a feed line to which a generator power conditioner is connected so that the generator power conditioner is configured to switch between a grid connecting operation in which the generator power conditioner carries out power conversion of a solar battery and to coordinate with a power grid and a grid independent operation in which the generator power conditioner is to be disconnected from the power grid, and serves as a power supply line for the generator power conditioner in the grid independent operation. The charging-discharging power conditioner includes a charge-discharge circuit configured to charge and discharge a storage battery connected to the charging-discharging power conditioner, a voltage sensor configured to sense a voltage of the grid-independent feed line, and a controller configured to control the charge-discharge circuit so as to maintain the sensed voltage by the voltage sensor at a predetermined target value in the grid independent operation. The controller is configured to control the charge-discharge circuit to: charge the storage battery by electric power supplied through the grid-independent feed line when the sensed voltage is greater than the target value; and supply electric power from the storage battery to the grid-independent feed line when the sensed voltage is smaller than the target value.

Preferably, the charging-discharging power conditioner further includes a selector configured to switch the target value between a first setting value and a second setting value. The selector is configured to automatically switch the target value between the first setting value and the second setting value in accordance with an output from the generator power conditioner to the grid-independent feed line when the grid independent operation is started.

The present invention can continue supplying electric power to a load(s), even when the generating power of the solar battery is less than the power consumption of the load in the grid independent operation.

### BRIEF DESCRIPTION OF DRAWINGS

FIG. 1 is a circuit diagram showing a configuration of a power supply system according to a first embodiment;
FIG. 2 is a block diagram showing a configuration of the power supply system according to the first embodiment;
FIG. 3 is a diagram illustrating a property of a solar battery in the power supply system according to the first embodiment;
FIG. 4 is a block diagram showing a configuration of a power supply system according to a second embodiment;
FIG. 5 is a block diagram showing a configuration of a power supply system according to a third embodiment;
FIG. 6 is a circuit diagram showing a configuration of the power supply system according to the third embodiment; and
FIG. 7 is a circuit diagram showing a configuration of a power supply system according to a fourth embodiment.

### DESCRIPTION OF EMBODIMENTS

### (First Embodiment)

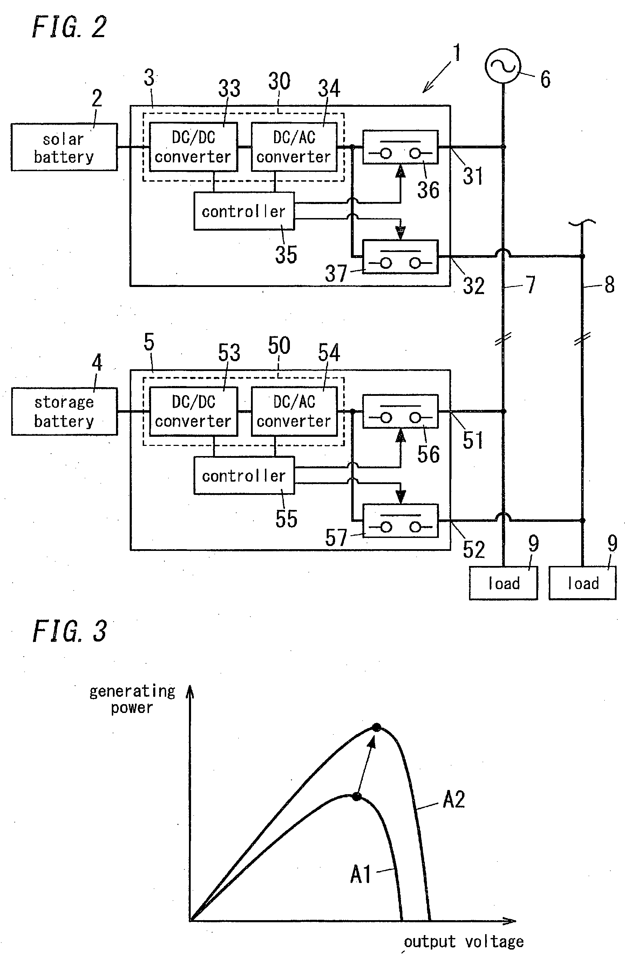

As shown in FIG. 2, a power supply system **1** according to the present embodiment includes a solar battery **2**, a generator power conditioner (a power conditioner for power generation) **3** connected to the solar battery **2**, a storage battery **4**, a charging-discharging power conditioner (a power conditioner for charging and discharging) **5** connected to the storage battery **4.** The power supply system **1** further includes a grid-connected feed line **7** connected to a power grid **6**, and a grid-independent feed line **8** disconnected from (independent of) the power grid **6**. Explanation of the embodiment is made with an example in which the power supply system **1** is applied to a general detached housing. However, the power supply system **1** is not limited to this example, and can be applied to each dwelling unit of an apartment building, a facility, an office, or the like. Examples of the storage battery **4** include a lead storage battery and a lithium-ion battery.

Each of the generator power conditioner **3** and the charging-discharging power conditioner **5** is configured switch between two operation states, which are "a grid connecting operation" in which the conditioner coordinates with the power grid **6** of a commercial power supply (a commercial power grid) and "a grid independent operation" in which the conditioner is to be disconnected from the power grid **6**. The generator power conditioner **3** has a first output terminal **31** and a second output terminal **32** which are physically separated from each other. Likewise, the charging-discharging power conditioner **5** has a first output terminal **51** and a second output terminal **52** which are physically separated from each other. Detailed structures of the power conditioners will be discussed later.

In the generator power conditioner **3** and the charging-discharging power conditioner **5** of the embodiment, the first output terminals **31** and **51** are each directly connected to the grid-connected feed line **7** to which the power grid **6** is connected, whereas the second output terminals **32** and **52** are each directly connected to the grid-independent feed line **8** which the power grid **6** is independent of. Therefore, in the embodiment, each of the first output terminals **31** and **51** functions as a power output terminal in the grid connecting operation, and each of the second output terminals **32** and **52** functions as a power output terminal in the grid independent operation. According to the generator power conditioner **3** and the charging-discharging power conditioner **5** of the embodiment, the first output terminals **31** and **51** are connected with each other via the grid-connected feed line **7**, and the second output terminals **32** and **52** are connected with each other via the grid-independent feed line **8**. With this configuration, each of the generator power conditioner **3** and the charging-discharging power conditioner **5** of the embodiment is configured to switch between two operation states (connection states) of the grid connecting operation in which the conditioner coordinates with the power grid **6** and the grid independent operation in which the conditioner operates independently of the power grid **6**.

Each of the grid-connected feed line **7** and the grid-independent feed line **8** is connected to a load(s) **9**. The load **9** of the embodiment is formed of an AC electric apparatus that is configured to operate with AC power supplied from a power conditioner or the power grid **6**. Examples of the load **9** include various electric apparatuses such as a lighting apparatus, a refrigerator, a television set, a medical apparatus, and a charger of a mobile phone. Note that the grid-connected feed line **7** and the grid-independent feed line **8** are not necessary to be directly connected to the load **9** of the electric apparatus, and may be connected to an outlet (not shown) to which a load **9** is detachably attached. In this configuration, the grid-connected feed line **7** is connected to an outlet usable during the grid connecting operation of the power conditioners, while the grid-independent feed line **8** is connected to a dedicated outlet for independent operation usable during the grid independent operation of the power conditioners.

The generator power conditioner **3** of the embodiment includes a DC/DC converter **33** connected to the solar battery **2,** a DC/AC converter **34** configured to convert DC power to AC power, a controller **35** configured to control each component, and a first switch **36** and a second switch **37** each of which is formed of a relay. The DC/DC converter **33** has a terminal to which the DC/AC converter **34** is connected and which is arranged opposite of the DC/DC converter **33** from the solar battery **2**. The DC/AC converter **34** has an AC output terminal, and the AC output terminal is connected to the first output terminal **31** via the first switch **36** and also to the second output terminal **32** via the second switch **37**. In the embodiment, an AC output terminal of a power converter **30** is therefore connected to the grid-connected feed line **7** via the first switch **36** and also to the grid-independent feed line **8** via the second switch **37**.

The DC/DC converter **33** is configured to step-up DC power of the solar battery **2** to supply the stepped-up power to the DC/AC converter **34**. The DC/AC converter **34** is formed of a unidirectional converter (an inverter) configured to convert DC power of the DC/DC converter **33** into AC power to supply the AC power to the first output terminal **31** or the second output terminal **32**. That is, the DC/DC converter **33** and the DC/AC converter **34** constitute the power converter **30** that is configured to carry out power conversion of the solar battery **2** to supply the converted power to the grid-connected feed line **7** or the grid-independent feed line **8**.

The controller **35** is configured to switch on the first switch **36** and switch off the second switch **37** under the grid connecting operation, and also switch on the second switch **37** and switch off the first switch **36** under the grid independent operation. The controller **35** of the embodiment is configured to switch connection states of the first and second switches **36** and **37**, thereby switching between the grid connecting operation in which the conditioner is connected to the power grid **6** and the grid independent operation in which the conditioner is disconnected from the power grid **6**. The controller **35** is also configured, when switching from the grid connecting operation to the grid independent operation, to switch off a disconnection device (not shown) disposed along the grid-connected feed line **7**. Note that a failure detector (not shown) configured to detect whether a failure such as power outage is present at the power grid **6** is disposed along the grid-connected feed line **7**. The controller **35** is configured to automatically switch between the grid connecting operation and the grid independent operation in accordance with a detecting result of the failure detector. That is, the controller **35** is configured to select the grid connecting operation (connected to the power grid **6**) when the power grid **6** is in normal, and also to be switched into the grid independent operation (disconnected from the power grid **6**) when the power grid **6** is in failure such as power outage. The generator power conditioner **3** generally includes, for avoiding an isolated operation, a built-in power-outage detector (not shown) that is configured to detect a presence of a failure of the power grid **6** such as power outage. Therefore, the controller **35** may be configured to switch between the grid connecting operation and the grid independent operation in accordance with a detection result of the power-outage detector.

The charging-discharging power conditioner **5** includes a DC/DC converter **53** connected to the storage battery **4**, a DC/AC converter **54** configured to convert DC power into AC power, a controller **55** configured to control each component, and a first switch **56** and a second switch **57** each of which is formed of a relay. The DC/DC converter **53** has a terminal to which the DC/AC converter **54** is connected and which is arranged opposite of the DC/DC converter **53** from the storage battery **4**. The DC/AC converter **54** has an AC output terminal, and the AC output terminal is connected to the first output terminal **51** via the first switch **56** and also to the second output terminal **52** via the second switch **57**. In the embodiment, an AC output terminal of a charge-discharge circuit **50** is therefore connected to the grid-connected feed line **7** via the first switch **56** and also connected to the grid-independent feed line **8** via the second switch **57**.

The DC/DC converter **53** is formed of a bidirectional converter configured to step-up DC power of the storage battery **4** to supply the stepped-up power to the DC/AC converter **54** in a discharging operation of the storage battery **4**, and also to step-down DC power of the DC/AC converter **54** to supply the stepped-down power to the storage battery **4** in a charging operation of the storage battery **4**. The DC/AC converter **54** is formed of a bidirectional converter configured to convert DC power of the DC/DC converter **53** into AC power to supply the AC power to the first output terminal **51** or the second output terminal **52** in the discharging operation of the storage battery **4**, and to convert AC power supplied through the first output terminal **51** or the second output terminal **52** into DC power to supply the DC power to the DC/DC converter **53** in the charging operation of the storage battery **4**.

That is, the DC/DC converter **53** and the DC/AC converter **54** constitute the charge-discharge circuit **50** that is configured to bidirectionally convert electric power between the storage battery **4** and the grid-connected feed line **7** or the grid-independent feed line **8** so as to charge and discharge the storage battery **4**. Hereinafter, a mode of the charge-discharge circuit **50** when it converts the output power of the storage battery **4** into AC power to supply the AC power to the grid-connected feed line **7** or the grid-independent feed line **8** will be called "discharge mode", and a mode of the charge-discharge circuit **50** when it converts electric power supplied through the grid-connected feed line **7** or the grid-independent feed line **8** into DC power to supply the DC power to the storage battery **4** will be called "charge mode".

The controller **55** is configured to switch on the first switch **56** and switch off the second switch **57** under the grid connecting operation, and also switch on the second switch **57** and switch off the first switch **56** under the grid independent operation. The controller **55** of the embodiment is configured to switch connection states of the first and second switches **56** and **57**, thereby switching between the grid connecting operation in which the conditioner is connected to the power grid **6** and the grid independent operation in which the conditioner is disconnected from the power grid **6**. The controller **55** is configured to automatically switch between the grid connecting operation and the grid independent operation in accordance with a detecting result of the failure detector disposed along the grid-connected feed line **7**. That is, the controller **55** is configured to select the grid connecting operation when the power grid **6** is in normal, and also to be switched into the grid independent operation when the power grid **6** is in failure such as power outage.

According to the above described constructions, when the power grid **6** is in normal, the load **9** is supplied with electric power from at least one of the generator power conditioner **3,** the charging-discharging power conditioner **5** and the power grid **6** through the grid-connected feed line **7**. On the other hand, when the power grid **6** is in failure, the load **9** is supplied with electric power from at least one of the generator power conditioner **3** and the charging-discharging power conditioner **5** through the grid-independent feed line **8**. Note that the charging-discharging power conditioner **5** is nearer to the load **9** than the generator power conditioner **3**, with regard to each of the grid-connected feed line **7** and the grid-independent feed line **8**.

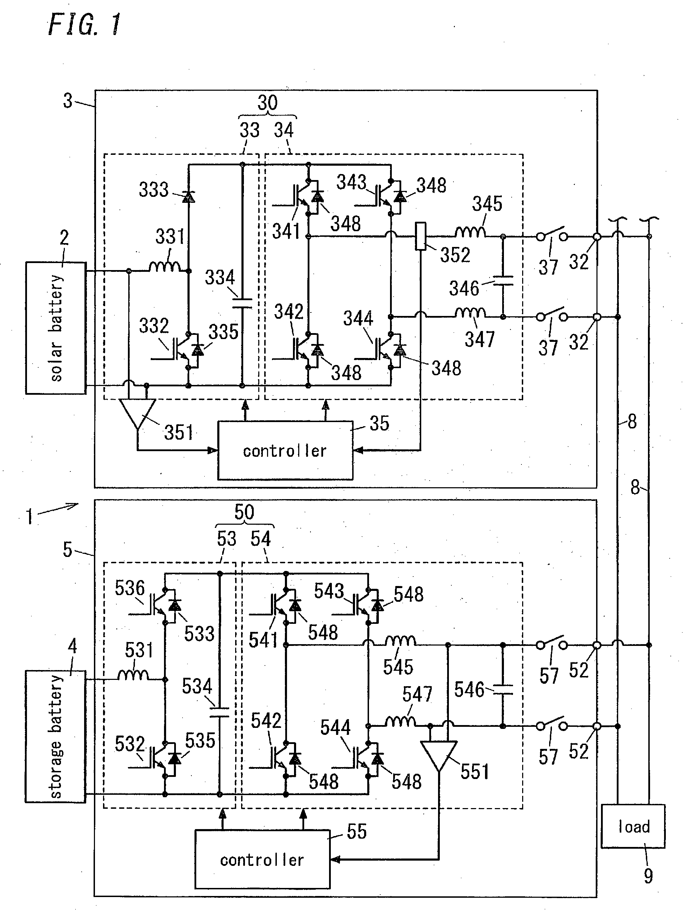

Specific structures of the generator power conditioner **3** and the charging-discharging power conditioner **5** according to the embodiment are described with reference to FIG. 1.

The DC/DC converter **33** of the generator power conditioner **3** is formed of a boost chopper circuit which includes: a series circuit, of an inductor **331** and a switching device **332**, connected to the solar battery **2**; and a series circuit of a diode **333** and a capacitor **334**. The circuit of the inductor **331** and the switching device **332** is connected to the solar battery **2** so that the inductor **331** is connected to a positive electrode side of the solar battery **2** and the switching device **332** is connected to a negative electrode side of the solar battery **2**. In the circuit of the diode **333** and the capacitor **334**, an anode of the diode **333** is connected to a junction of the inductor **331** and the switching device **332**; and a terminal of the capacitor **334** opposite thereof from the diode **333** is connected to a junction of the negative electrode side of the solar battery **2** and the switching device **332**. The switching device **332** of the embodiment is formed of an insulated gate bipolar transistor (IGBT), and a diode **335** is connected in inverse-parallel with the switching device **332**. When the controller **35** controls so as to turn on and off the switching device **332** at a high frequency under a condition where the DC/DC converter **33** is supplied with electric power from the solar battery **2**, the DC/DC converter **33** generates a stepped-up DC voltage across the capacitor **334**.

The DC/AC converter **34** of the generator power conditioner **3** is formed of a full-bridge inverter circuit in which four switching devices **341** to **344** are connected across an output terminal of the DC/DC converter **33** (i.e., connected across the capacitor **334**). The DC/AC converter **34** includes an LC filter which is formed of a series circuit of an inductor **345**, a capacitor **346** and an inductor **347** and which is connected between a junction of the switching devices **341** and **342** and a junction of the switching devices **343** and **344**. Each of the switching devices **341** to **344** of the embodiment is formed of an IGBT, and respective diodes **348** are connected in inverse-parallel with the switching devices **341** to **344**. When the controller **35** controls so as to turn on and off the switching devices **341** to **344** under a condition where the DC/AC converter **34** is supplied with electric power from the DC/DC converter, the DC/AC converter **34** generates an AC voltage across the capacitor **346**. An output terminal of the DC/AC converter **34** (i.e., both ends of the capacitor **346**) is connected to the second output terminal **32** via the second switch **37** of double pole switch.

Incidentally, as shown in FIG. 3, the generating power of the solar battery **2** is not constant and varies according to the output voltage thereof. Therefore, it is preferable that the solar battery **2** is configured to operate at an optimum point as maximum generating power (maximum power point). The generator power conditioner **3** of the embodiment therefore has a function of the maximum power point tracking (MPPT) control. The MPPT control is a technique of controlling the solar battery **2** so that the operating point of the solar battery **2** follows the maximum power point so as to maximize the output of the solar battery **2**, regardless of fluctuation in the output voltage and the output current of the solar battery **2** caused by variations in temperature of the solar battery **2**, solar radiation intensity, and the like. The MPPT control is a well know technique, and detailed explanation thereof is omitted. In FIG. 3, the horizontal axis indicates the output voltage of the solar battery **2**, and the vertical axis indicates the generating power of the solar battery **2**. Note that **"A1"** indicates a property of the solar battery **2** under comparatively low solar radiation intensity, **"A2"** indicates a property thereof under comparatively high solar radiation intensity, and black circles indicate optimum points as maximum generating power.

The generator power conditioner **3** of the embodiment is configured to perform the MPPT control at least in the grid independent operation (i.e., under a condition where the conditioner is disconnected from the power grid **6**). In detail, the generator power conditioner **3** includes a voltage sensor **351** configured to sense the output voltage of the solar battery **2**; and a current sensor **352** configured to sense the output current of the DC/AC converter **34**. The controller **35** is supplied with outputs of the voltage sensor **351** and the current sensor **352**. In the example shown in FIG. 1, the voltage sensor **351** is configured to sense a voltage at a junction of the DC/DC converter **33** and the solar battery **2**, and the current sensor **352** is interposed between the inductor **345** and the junction of the switching devices **341** and **342** in the DC/AC converter **34**.

The controller **35** is configured to control the power converter **30** (i.e., the DC/DC converter **33** and the DC/AC converter **34**) based on the sensing results of the voltage sensor **351** and the current sensor **352** to achieve the MPPT control. The controller **35** is mainly formed of a microcomputer, and is configured to execute programs stored in a memory (not shown) to achieve functions for the control of the power converter **30**.

With this configuration, the generator power conditioner **3** of the embodiment performs the MPPT control when the generator power conditioner **3** is connected to the grid-independent feed line **8** with the second switch **37** switched on.

Although not shown in FIG. 1, the first output terminal **31** of the generator power conditioner **3** is connected to the output terminal of the DC/AC converter **34** (i.e., both ends of the capacitor **346**) via the first switch **36** of double pole switch (see FIG. 2). The generator power conditioner **3** of the embodiment is configured to perform the MPPT control also when the generator power conditioner **3** is connected to the grid-connected feed line **7** with the first switch **36** switched on.

The DC/DC converter **53** of the charging-discharging power conditioner 5 includes: a series circuit, of an inductor **531** and a switching device **532**, connected to the storage battery **4**; and a series circuit of a diode **533** and a capacitor **534**. The circuit of the inductor **531** and the switching device **532** is connected to the storage battery **4** so that the inductor **531** is connected to a positive electrode side of the storage battery **4** and the switching device **532** is connected to a negative electrode side of the storage battery **4**. In the circuit of the diode **533** and the capacitor **534**, an anode of the diode **533** is connected to a junction of the inductor **531** and the switching device **532**; and a terminal of the capacitor **534** opposite thereof from the diode **533** is connected to a junction of the negative electrode side of the storage battery **4** and the switching device **532**. The switching device **532** of the embodiment is formed of an IGBT, and a diode **535** is connected in inverse-parallel with the switching device **532**. A switching device for charging, **536**, formed of an IGBT is connected in parallel with the diode **533**.

For discharging the storage battery **4** (in the discharge mode), the controller **55** controls so as to turn on and off the switching device **532** at a high frequency, and thereby the DC/DC converter **53** generates a stepped-up DC voltage across the capacitor **534**. For charging the storage battery **4** (in the charge mode), the switching device **532** is kept turned off and the switching device for charging, **536** is controlled to turn on and off at a high frequency, and thereby the DC/DC converter **53** steps down a voltage supplied from the DC/AC converter **54** to charge the storage battery **4** by the stepped-down DC voltage.

The DC/AC converter **54** of the charging-discharging power conditioner **5** is formed of a full-bridge inverter circuit in which four switching devices **541** to **544** are connected across the capacitor **534** of the DC/DC converter **53**. The DC/AC converter **54** includes an LC filter which is formed of a series circuit of an inductor **545**, a capacitor **546** and an inductor **547** and which is connected between a junction of the switching devices **541** and **542** and a junction of the switching devices **543** and **544**. Each of the switching devices **541** to **544** of the embodiment is formed of an IGBT, and respective diodes **548** are connected in inverse-parallel with the switching devices **541** to **544**.

For discharging the storage battery **4** (in the discharge mode), the controller **55** controls so as to turn on and off the switching devices **541** to **544**, and thereby the DC/AC converter **54** generates an AC voltage across the capacitor **546**. Both ends of the capacitor **546** are connected to the second output terminal **52** via the second switch **57** of double pole switch. For charging the storage battery **4** (in the charge mode), the controller 55 keeps the switching devices **541** to **544** turned off, and thereby the DC/AC converter **54** supplies a DC voltage to the DC/DC converter **53**.

The charging-discharging power conditioner **5** of the embodiment is configured to perform a constant voltage control so as to maintain a voltage (effective value) of the grid-independent feed line **8** at constant in the grid independent operation by switching the charge and discharge of the storage battery **4**. In detail, the charging-discharging power conditioner **5** includes a voltage sensor **551** configured to sense a voltage of the second output terminal **52**, and the controller **55** is supplied with an output of the voltage sensor **551**. In the example shown in FIG. 1, the voltage sensor **551** is connected between a junction of the inductor **545** and the capacitor **546** and a junction of the capacitor **546** and the inductor **547** and to thereby sense a voltage across the capacitor **546**.

The controller **55** is configured to control the charge-discharge circuit **50** (i.e., the DC/DC converter **53** and the DC/AC converter **54**) based on the sensing result of the voltage sensor **551** to achieve the constant voltage control for maintaining the voltage of the second output terminal **52** at constant. In detail, the controller **55** is configured to keep the sensed voltage (sensing result) by the voltage sensor **551** at a predetermined target value by way of operating the charge-discharge circuit **50** in the discharge mode under a condition where the sensed voltage is smaller than the target value and also operating the charge-discharge circuit **50** in the charge mode under a condition where the sensed voltage is greater than the target value. Note that the controller **55** is configured to adjust the magnitude of the output power in accordance with a difference between the target value and the sensed voltage. The controller **55** is mainly formed of a microcomputer, and is configured to execute programs stored in a memory (not shown) to achieve functions for the control of the charge-discharge circuit **50**.

Although not shown in FIG. 1, the first output terminal **51** of the charging-discharging power conditioner **5** is connected to the output terminal of the DC/AC converter **54** (i.e., both ends of the capacitor **546**) via the first switch **56** of double pole switch (see FIG. 2). The charging-discharging power conditioner **5** of the embodiment is configured to perform the constant voltage control also when the charging-discharging power conditioner **5** is connected to the grid-connected feed line **7** with the first switch **56** switched on.

Described is an operation of the power supply system **1** according to the embodiment when the power grid **6** is in failure (i.e., in the grid independent operation).

When detecting a failure in the power grid **6**, the generator power conditioner **3** and the charging-discharging power conditioner **5** of the embodiment switch on the respective second switches **37** and **57** to be connected with each other through the grid-independent feed line **8**, thereby automatically operating in the grid independent operation. In this state, the generator power conditioner **3** performs the MPPT control so as to maximize the generating power of the solar battery **2**, and the charging-discharging power conditioner **5** performs the constant voltage control so as to maintain the voltage of the grid-independent feed line **8** at constant.

In a case where the output power from the generator power conditioner **3** to the grid-independent feed line **8** (hereinafter, referred to as "generation power") is greater than a consumed power in the load(s) **9** connected to the grid-independent feed line **8** (hereinafter, referred to as "load power"), the load power is entirely covered by the generation power. In this case, the supplied power from the generator power conditioner **3** is larger than the electric power supplied to the load **9** in the grid-independent feed line **8**, and as a result the voltage in the grid-independent feed line **8** is to be greater than a rated voltage to cause the sensed voltage by the voltage sensor **551** to be greater than the target value.

In this case, the charging-discharging power conditioner **5** operates the charge-discharge circuit **50** in the charge mode so as to convert AC power supplied through the grid-independent feed line **8** into DC power to supply the DC power to the storage battery **4**, thereby charging the storage battery **4** by a surplus power that is a difference between the generation power and the load power. In other words, when the sensed voltage is greater than the target voltage, the controller **55** controls the charge-discharge circuit **50** so as to charge the storage battery **4** by the electric power supplied through the grid-independent feed line **8**. In the embodiment, the charging-discharging power conditioner **5** is configured to adjust the magnitude of the output power in accordance with a difference between the target value and the sensed voltage by the voltage sensor **551** so that the output power to the storage battery **4** increases with increase in the difference between the target value and the sensed voltage.

In a case where the generation power is smaller than the load power, the load power is covered by sum of the generation power and the output power of the charging-discharging power conditioner **5**. In this case, the supplied power from the generator power conditioner **3** is smaller than the electric power supplied to the load **9** in the grid-independent feed line **8,** and as a result the voltage in the grid-independent feed line **8** is to be smaller than the rated voltage to cause the sensed voltage by the voltage sensor **551** to be smaller than the target value.

In this case, the charging-discharging power conditioner **5** operates the charge-discharge circuit **50** in the discharge mode so as to convert DC power supplied from the storage battery **4** into AC power to supply the AC power to the grid-independent feed line **8**, thereby compensating a shortfall-power, which is a difference between the load power and the generation power, by the discharging power of the storage battery **4.** In other words, when the sensed voltage is smaller than the target voltage, the controller **55** controls the charge-discharge circuit **50** so as to supply electric power from the storage battery **4** to the grid-independent feed line **8**. In the embodiment, the charging-discharging power conditioner **5** is configured to adjust the magnitude of the output power in accordance with a difference between the target value and the sensed voltage by the voltage sensor **551** so that the output power to the grid-independent feed line **8** increases with increase in the difference between the target value and the sensed voltage.

In a case where the generation power substantially equals to the load power, the load power is covered by the generation power. In this case, the supplied power from the generator power conditioner **3** equals to the electric power supplied to the load **9** in the grid-independent feed line **8**, and the voltage in the grid-independent feed line **8** corresponds to the rated voltage, and thus the sensed voltage by the voltage sensor **551** substantially equals to the target value. Accordingly, the charging-discharging power conditioner 5 causes the charge-discharge circuit **50** to stop so as to stop charging and discharging of the storage battery **4**.

As a result, the power supply system **1** of the embodiment can stably supply electric power to the load **9** when the power grid **6** is in failure (i.e., in the grid independent operation) without being affected by the fluctuation in the output power of the generator power conditioner **3** (the generation power).

The charging-discharging power conditioner **5** may have a target value having a certain range, such as "100 V ± 2 V". In this configuration, the charging-discharging power conditioner **5** operates the charge-discharge circuit **50** in the charge mode when the sensed voltage is greater than an upper limit (**102** V, in this example) of the target value, and operates the charge-discharge circuit **50** in the discharge mode when the sensed voltage is smaller than a lower limit (**98** V, in this example) of the target value. The charging-discharging power conditioner **5** causes the charge-discharge circuit **50** to stop when the sensed voltage is within the upper limit and the lower limit of the target value.

The power supply system **1** of the embodiment is configured so that the generator power conditioner **3** performs the MPPT control and the charging-discharging power conditioner **5** performs the constant voltage control not only when the power grid **6** is in failure but also when the power grid **6** is in normal (i.e., in the grid connecting operation). With this configuration, when the generation power (the output power of the generator power conditioner **3**) is smaller than the load power in the grid connecting operation, a shortfall-power is compensated by the output power of the charging-discharging power conditioner **5** and the electric power supplied from the power grid **6**. Thus, when the remaining battery level of the storage battery **4** is not sufficient, the load **9** can be supplied with electric power from the power grid **6**. Note that, in this case, the charging-discharging power conditioner **5** may operate the charge-discharge circuit **50** in the charge mode to charge the storage battery **4** by the electric power supplied from the power grid **6**. In the grid connecting operation, when the storage battery **4** is fully charged and the generation power is greater than the load power, a surplus power of the generator power conditioner **3** may be sold by a reverse flow to the power grid **6**.

According to the above described power supply system **1**, the generator power conditioner **3** performs the MPPT control in the grid independent operation, and accordingly the generated power of the solar battery **2** can be used effectively with little waste, in comparison with a case where the generator power conditioner **3** performs a constant voltage control. That is, the generator power conditioner **3** keeps the optimum point (the maximum power point) as maximum generating power of the solar battery **2**, and accordingly it is possible to effectively use the generating power of the solar battery **2** without depending on the state of the load **9** connected to the grid-independent feed line **8**.

The charging-discharging power conditioner **5** performs the constant voltage control in the grid independent operation so as to maintain the voltage of the grid-independent feed line **8** at constant, and accordingly it is possible to stably supply electric power to the load **9** without being affected by the fluctuation in the output power of the generator power conditioner **3** (the generation power). Although the output power of the generator power conditioner **3** fluctuates due to the generator power conditioner **3** performing the MPPT control, the charging-discharging power conditioner **5** can compensate this fluctuation. Therefore, the load **9** connected to the grid-independent feed line **8** can be supplied stable electric power from the grid-independent feed line **8**.

In the grid independent operation, since the storage battery **4** is charged by the surplus power, the charging-discharging power conditioner **5** can supply electric power to the load **9** by the stored energy in the storage battery **4** when the consumed power of the load **9** exceeds the generating power of the solar battery **2**. Accordingly, a load **9** of which power consumption is larger than a maximum output power of the generator power conditioner **3** can be powered in the grid independent operation, and it is possible to increase the degrees of freedom of choice of loads. In addition, even when the generating power of the solar battery **2** is lowered less than the power consumption of the load **9** due to decreased solar radiation or a load **9** having a large power consumption, it is possible to continue supplying electric power to the load **9** by the charging-discharging power conditioner **5**. Thus, it is possible to stably supply electric power to the load **9**.

### (Second Embodiment)

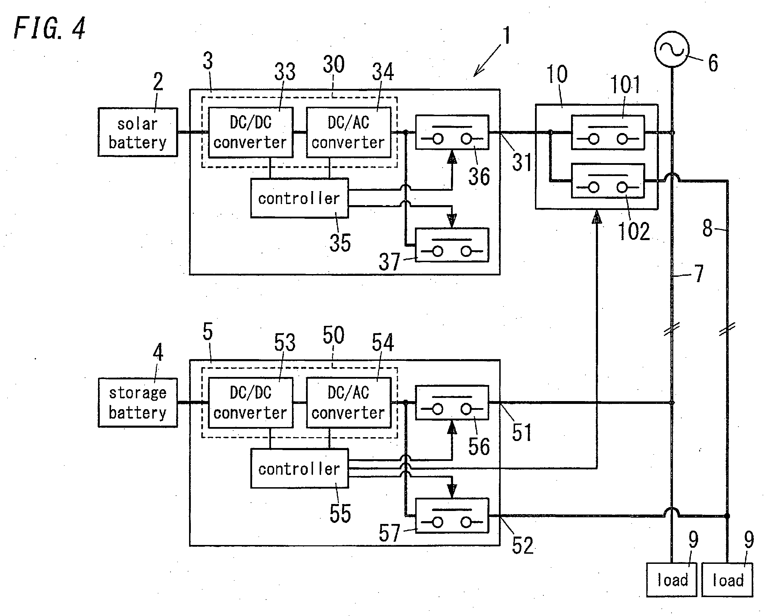

As shown in FIG. 4, a power supply system **1** according to the embodiment includes a connection selector **10** interposed between: a first output terminal **31** of a generator power conditioner **3**; and grid-connected and grid-independent feed lines **7** and **8**. The generator power conditioner **3** of the embodiment has an operation mode for outputting electric power through the first output terminal **31**, and is configured to perform an MPPT control in this operation mode. The present embodiment has the same structure for performing the MPPT control as that described in the first embodiment, such as a voltage sensor **351** and a current sensor **352**. That is, in the generator power conditioner **3** of the embodiment, the first output terminal **31** is connected to an output terminal of a power converter **30** of FIG. 1 (i.e., connected across a capacitor **346**). A charging-discharging power conditioner **5** of the embodiment has a similar structure as that described in the first embodiment. Like kind elements are assigned the same reference numerals as depicted in the first embodiment and explanation is omitted as needed.

In the embodiment of which configuration is shown in FIG. **4**, the connection selector **10** has a first connection switch (grid-connection side switch) **101** and a second connection switch (grid-independent side switch) **102**. The first connection switch **101** is interposed between the first output terminal **31** and the grid-connected feed line **7**. The second connection switch **102** is interposed between the first output terminal **31** and the grid-independent feed line **8**. That is, the AC output terminal of the power converter **30** is connected to the grid-connected feed line **7** via the first connection switch **101** and also to the grid-independent feed line **8** via the second connection switch **102**. The connection selector **10** is configured to switch either one of the first and second connection switches **101** and **102** on selectively in accordance with a switch signal supplied from a controller **55** of the charging-discharging power conditioner **5**, thereby connecting the first output terminal **31** to either the grid-connected feed line **7** or the grid-independent feed line **8**.

In this configuration, the generator power conditioner **3** is switched between a grid connecting operation (in which the conditioner is connected to the power grid **6**) and a grid independent operation (in which the conditioner is disconnected from the power grid **6**) by the connection selector **10**. Thus, a first switch **36** is kept turned on and a second switch **37** is kept turned off by a controller **35** in this configuration, regardless of the grid connecting operation or the grid independent operation. In the embodiment, the generator power conditioner **3** therefore outputs electric power only through the first output terminal **31**, and supplies the electric power to the grid-connected feed line **7** through the first connection switch **101** in the grid connecting operation, whereas supplies the electric power to the grid-independent feed line **8** through the second connection switch **102** in the grid independent operation.

It is notable that power conditioners on the market are generally configured to: perform the MPPT control in an operation mode for outputting electric power through a first output terminal (connection output terminal); and perform, for ensuring an operating voltage for a load, a constant voltage control so as to maintain an output voltage at a predetermined target value in an operation mode for outputting electric power through a second output terminal (independent output terminal). Therefore, according to the configuration of the embodiment shown in FIG. 4, such the general power conditioner on the market can be used for the generator power conditioner **3** in the power supply system **1**. Described in detail, in the configuration shown in FIG. 4, the generator power conditioner **3** always operates through the first output terminal **31**. As a result, the generator power conditioner **3** always performs the MPPT control regardless of the fact that the connection selector **10** switches the generator power conditioner **3** between the grid connecting operation and the grid independent operation. Therefore, although the power conditioner has both of an output terminal for MPPT control (the first output terminal) and an output terminal for constant voltage control (the second output terminal), it is possible to cause a power conditioner to always perform the MPPT control. The connection selector **10** of the embodiment is configured to be operated depending on the switch signal from outside, but not limited thereto. For example, the connection selector **10** may include a failure detector (not shown) configured to detect whether a failure such as power outage is present at the power grid **6**, and be configured to switch between the grid connecting operation and the grid independent operation in accordance with a detecting result of the failure detector.

In the power supply system **1** of the embodiment, the generator power conditioner **3** performs the MPPT control in the grid independent operation, and accordingly the generated power of the solar battery **2** can be used effectively with little waste, in comparison with a case where the generator power conditioner **3** performs a constant voltage control.

The charging-discharging power conditioner **5** performs the constant voltage control in the grid independent operation so as to maintain the voltage of the grid-independent feed line **8** constant, and accordingly it is possible to stably supply electric power to a load **9** without being affected by the fluctuation in the output power of the generator power conditioner **3** (the generation power). Therefore, the load **9** connected to the grid-independent feed line **8** can be supplied electric power stably through the grid-independent feed line **8**.

In the grid independent operation, since the storage battery **4** is charged by a surplus power, the charging-discharging power conditioner **5** can supply electric power to the load **9** by the stored energy in the storage battery **4** when the consumed power of the load **9** exceeds the generating power of the solar battery **2**. Accordingly, a load **9** of which power consumption is larger than a maximum output power of the generator power conditioner **3** can be powered in the grid independent operation, and it is possible to increase the degrees of freedom of choice of loads. In addition, even when the generating power of the solar battery **2** is lowered less than the power consumption of the load **9** due to decreased solar radiation or a load **9** having a large power consumption, it is possible to continue supplying electric power to the load **9** by the charging-discharging power conditioner **5**. Thus, it is possible to stably supply electric power to the load **9**.

Note that the generator power conditioner **3** of the embodiment may omit a second output terminal **32**.

### (Third Embodiment)

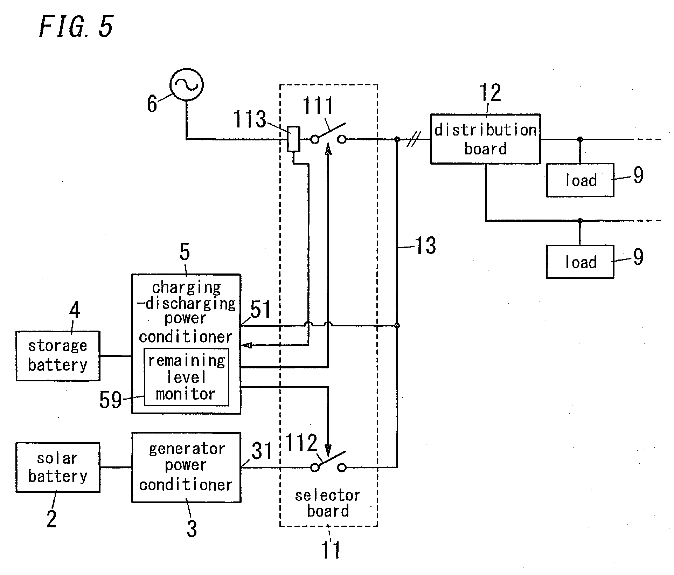

As shown in FIG. 5, a power supply system **1** according to the embodiment includes a selector board **11** which is connected to a power grid **6**, a generator power conditioner **3**, and a charging-discharging power conditioner **5**. Like kind elements are assigned the same reference numerals as depicted in the second embodiment and explanation is omitted as needed.

As shown in FIG. 5, the embodiment is further provided with a distribution board **12**. The power grid **6**, the generator power conditioner **3** and the charging-discharging power conditioner **5** are connected to a load(s) **9** via the selector board **11** and the distribution board **12**. The distribution board **12** has a main breaker (not shown) and branch breakers (not shown), and each of the branch breakers can be connected with one or more loads **9**.

The embodiment does not include a grid-connected feed line and a grid-independent feed line individually, but includes a single feed line **13** which is connected to the distribution board **12**. The power grid **6**, the generator power conditioner **3** and the charging-discharging power conditioner **5** are connected to the feed line **13** via the selector board **11**. As shown in FIG. 5, the selector board **11** has a grid side switch **111** and a generator side switch **112**. The grid side switch **111** is interposed between the power grid **6** and the feed line **13**. The generator side switch **112** is interposed between the generator power conditioner **3** and the feed line **13**. That is, the feed line **13** is connected to the power grid **6** via the grid side switch **111**. The generator power conditioner **3** is connected to the feed line **13** via the generator side switch **112**. The charging-discharging power conditioner **5** is connected to the feed line **13** through the selector board **11** without interrupting the connection therebetween.

With this configuration, a connection state between the feed line **13** and the power grid **6** is switched by the grid side switch **111** of the selector board **11**. Therefore, the feed line **13** functions as a grid-connected feed line when the grid side switch **111** is switched on, and functions as a grid-independent feed line when the grid side switch **111** is switched off. Under a condition where the generator side switch **112** is switched on, the generator power conditioner **3** is configured to operate in a grid connecting operation when the grid side switch **111** is switched on, while operate in a grid independent operation when the grid side switch **111** is switched off. Similarly, the charging-discharging power conditioner **5** is configured to operate in the grid connecting operation when the grid side switch **111** is switched on, while operate in the grid independent operation when the grid side switch **111** is switched off.

Note that the "grid connecting operation" and the "grid independent operation" in the present description do not represent operation modes of the generator power conditioner **3**, but represent connection states between the generator power conditioner **3** and the power grid **6**. In the present description, the "grid connecting operation" indicates a state in which the generator power conditioner **3** is connected to the power grid **6** to coordinate with the power grid **6**, and the "grid independent operation" indicates a state in which the generator power conditioner **3** is disconnected from the power grid **6**. General generator power conditioners **3** have two operation modes of "grid-connection operation mode" for outputting electric power through a first output terminal **31** and "autonomous operation mode" for outputting electric power through a second output terminal **32**, but these operation modes are not necessarily related to the "grid connecting operation" and the "grid independent operation" that represent the connection states with the power grid **6**. That is, the generator power conditioner **3** can operate in each operation modes of the "grid-connection operation mode" and the "autonomous operation mode" even when the generator power conditioner **3** operates in the "grid independent operation" in which the generator power conditioner **3** is disconnected from the power grid **6**.

The generator power conditioner **3** of the embodiment has a switch (not shown) for selecting the "operation modes". The operation mode of the generator power conditioner **3** can be manually switched between the grid-connection operation mode (in which a first switch **36** is switched on and a second switch **37** is switched off) and the autonomous operation mode (in which the first switch **36** is switched off and the second switch **37** is switched on) in accordance with an operation of this switch. Thus, even when the storage battery **4** is fully discharged in the grid independent operation (in which the generator power conditioner **3** is disconnected from the power grid **6**), electric power can be supplied from the generator power conditioner **3** by switching the operation mode of the generator power conditioner **3** from the grid-connection operation mode to the autonomous operation mode. For example, the generator power conditioner **3** can be configured to supply electric power by the second output terminal **32** to a dedicated independent feed line (not shown) to which the second output terminal **32** is connected, when switched into the autonomous operation mode (the same can be applied to the generator power conditioner **3** of the second embodiment).

In the example below, it is assumed that the generator power conditioner **3** always operates in the grid-connection operation mode in which the first switch **36** is switched on and the second switch **37** is switched off when the generator side switch **112** is switched on, regardless of the grid connecting operation or the grid independent operation. That is, it is assumed that the generator power conditioner **3** is connected to the generator side switch **112** only by the first output terminal **31**, and the generator power conditioner **3** outputs electric power to the feed line **13** only through the first output terminal **31**. Similarly, the charging-discharging power conditioner **5** is connected to the feed line **13** only by a first output terminal **51**, and the charging-discharging power conditioner **5** outputs electric power to the feed line **13** only through the first output terminal **51**.

In the power supply system **1** of the embodiment, the charging-discharging power conditioner **5** has a communication function configured to communicate with the selector board **11**, and the charging-discharging power conditioner **5** is configured to control, using control signals, ON and OFF of at least the grid side switch **111** and the generator side switch **112**.

A controller **55** (see FIG. 1) of the charging-discharging power conditioner **5** is configured to automatically switch between the grid connecting operation and the grid independent operation in accordance with a presence and an absence of a failure (such as power outage) at the power grid **6**. That is, the controller **55** is configured to switch on the grid side switch **111** to operate in the grid connecting operation when the power grid **6** is in normal, and switch off the grid side switch **111** to operate in the grid independent operation when the power grid **6** is in failure such as power outage. In detail, the charging-discharging power conditioner **5** includes a built-in power-outage detector (not shown) configured to detect a presence of a failure of the power grid **6** such as power outage, for avoiding an isolated operation, and the controller **55** is configured to switch off the grid side switch **111** to select the grid independent operation in response to a detection result (failure) of the power-outage detector. In order to detect a power restoration of the power grid **6** when the grid side switch **111** is switched off, the selector board **11** is further provided, on an upstream side (the power grid **6** side) of the grid side switch **111**, with a power restoration detector **113** configured to detect a power restoration. A detection result of the power restoration detector **113** is supplied to the charging-discharging power conditioner **5**. The controller **55** is configured to select the grid connecting operation by switching on the grid side switch **111** in response to a detection result (power restoration) of the power restoration detector **113**.

As shown in FIG. 5, the charging-discharging power conditioner **5** has a remaining level monitor **59** configured to monitor a remaining battery level (amount of charge) of the storage battery **4** which is connected to the charging-discharging power conditioner **5**. The remaining level monitor **59** is, for example, configured to monitor the remaining battery level of the storage battery **4** by measuring a voltage of the storage battery **4**. Hereinafter, a remaining battery level of the storage battery **4** at which the storage battery **4** is fully charged is referred to as "upper limit value".

The controller **55** (see FIG. 1) of the charging-discharging power conditioner **5** is configured to: keep the generator side switch **112** turned on in the grid connecting operation; and control ON and OFF of the generator side switch **112** in accordance with the remaining battery level of the storage battery **4** in the grid independent operation. In the grid independent operation, the controller **55** of the embodiment switches on the generator side switch **112** when the remaining battery level monitored by the remaining level monitor **59** is less than the upper limit value, and switches off the generator side switch **112** when the remaining battery level is the upper limit value or more. In other words, when the storage battery **4** is fully charged under a condition where the power grid **6** is in failure (i.e., in the grid independent operation), the charging-discharging power conditioner **5** forcibly stops the generator power conditioner **3** outputting electric power to the feed line **13** (grid-independent feed line).

When the power-outage detector detects a failure of the power grid **6** such as power outage, the charging-discharging power conditioner **5** temporarily stops outputting electric power to the feed line **13**, switches off the grid side switch **111**, and then starts a constant voltage control so as to maintain the voltage (effective value) of the feed line **13** at constant. With this configuration, power supply to the feed line **13** from at least the charging-discharging power conditioner **5** and the power grid **6** temporarily stops when a failure occurs in the power grid **6**. When the power restoration detector **113** detects a power restoration of the power grid **6**, the charging-discharging power conditioner **5** temporarily stops outputting electric power to the feed line **13**, switches the grid side switch **111** to ON, and then restarts the grid connecting operation.

In the embodiment, even when the power grid **6** is in normal (in the grid connecting operation), the generator power conditioner **3** performs a MPPT control and the charging-discharging power conditioner **5** performs a constant voltage control.

When performing the MPPT control, the generator power conditioner **3** senses the voltage of the feed line **13** to adjust an output current in accordance with the sensed voltage, i.e., performs a current control. Therefore, the generator power conditioner **3** cannot perform the current control (the MPPT control) without a reference voltage on the feed line **13**. Accordingly, the generator power conditioner **3** stops outputting electric power to the feed line **13** after the charging-discharging power conditioner **5** and the power grid **6** stop supplying electric power to the feed line **13** due to a failure in the power grid **6**, because there is no reference voltage on the feed line **13**. With this configuration, the generator power conditioner **3** can be prevented from performing an isolated operation when the power grid **6** is in failure (grid independent operation). Similarly, the generator power conditioner **3** temporarily stops outputting electric power to the feed line **13** in the power restoration of the power grid **6** because power supply to the feed line **13** from the charging-discharging power conditioner **5** and the power grid **6** temporarily stops.

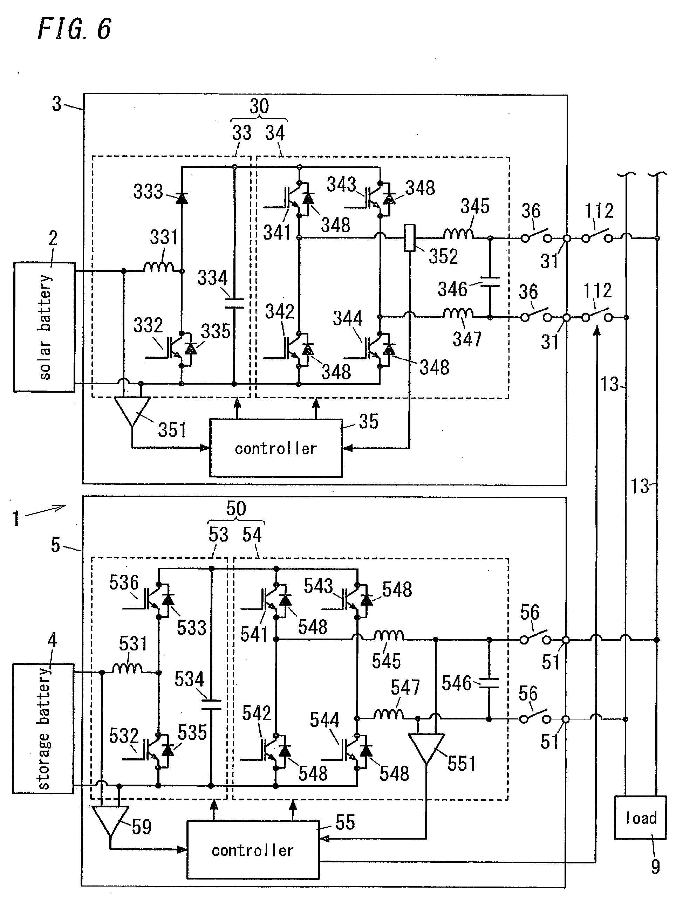

FIG. **6** shows an example of a specific circuit structure of the power supply system **1** according to the embodiment. Note that FIG. **6** omit illustration of second output terminals **32** and **52** (see FIG. 1), second switches **37** and **57** (see FIG. **1**), and the distribution board **12** (see FIG. 5).

The power supply system **1** shown in FIG. **6** differs from the second embodiment in that the first output terminal **31** of the generator power conditioner **3** of the example is connected to the feed line **13** via the generator side switch **112**, and in that the first output terminal **51** of the charging-discharging power conditioner **5** of the example is connected to the feed line **13**. The power supply system **1** shown in FIG. **6** also differs from the second embodiment in that the charging-discharging power conditioner **5** of the example has the remaining level monitor **59**, and the controller **55** is configured to control ON and OFF of the generator side switch **112** based on an output of the remaining level monitor **59**. In the example of FIG. **6**, the remaining level monitor **59** is connected across both input ends, which is at the storage battery **4** side, of the DC/DC converter **53**. The remaining level monitor **59** is configured to measure a voltage across the storage battery **4** to monitor the remaining battery level of the storage battery **4**, and to supply the controller **55** with a measured result.

Described is an operation of the power supply system **1** according to the embodiment.

When the power grid **6** is in normal (i.e., not in power outage), both of the grid side switch **111** and the generator side switch **112** of the selector board **11** are switched on. The power grid **6**, the generator power conditioner **3** and the charging-discharging power conditioner **5** are therefore connected to the distribution board **12** via the feed line **13**, and thus the generator power conditioner **3** and the charging-discharging power conditioner **5** operate in the grid connecting operation.

If a failure such as power outage occurs in the power grid **6**, the charging-discharging power conditioner **5** stops outputting electric power to the feed line **13** in response to the detection result (failure) from the power-outage detector, and as a result the generator power conditioner **3** stops outputting electric power to the feed line **13**. Then, the charging-discharging power conditioner 5 supplies the selector board **11** with a control signal to switch off the grid side switch **111**, thereby disconnecting the power grid **6** from the distribution board **12**.

The charging-discharging power conditioner **5** is therefore switched into the grid independent operation to start the constant voltage control for maintaining the voltage (effective value) of the feed line **13** at constant so as to supply the feed line **13** with AC power having the substantially same frequency and amplitude as those of the power grid **6**. The generator power conditioner **3** then detects and regards the output voltage of the charging-discharging power conditioner **5** as a "pseudo" grid voltage (as the reference voltage) regardless of the fact that the power grid **6** is disconnected from the feed line **13**. The generator power conditioner **3** thereby starts outputting electric power to the feed line **13** under the MPPT control, as similar to the grid connecting operation. That is, even in the grid independent operation in which the power grid **6** is disconnected from the feed line **13**, the generator power conditioner **3** also operates in the grid-connection operation mode (in which the generator power conditioner **3** outputs electric power through the first output terminal **31**), as similar to the grid connecting operation.

In this state (in the grid independent operation), the generator power conditioner **3** performs the MPPT control so as to maximize a generating power of the solar battery **2**, while the charging-discharging power conditioner **5** performs the constant voltage control so as to maintain the voltage of the feed line **13** at constant. Hence, when the output power of the generator power conditioner **3** (generation power) is greater than a consumed power in the load **9** (load power), the charging-discharging power conditioner **5** can charge the storage battery **4** by a surplus power that is a difference between the generation power and the load power. It is preferable that the storage battery **4** has a maximum permissible power for charging which is equal to or more than the maximum value of the generation power, in consideration of a case where the load power is zero and the generation power and the load power are each variable. With such the storage battery **4**, all the generation power can be supplied to charge the storage battery **4** by the charging-discharging power conditioner **5** in the grid independent operation even in a case where the load power is zero. On the other hand, when the generation power is smaller than the load power, the charging-discharging power conditioner **5** compensates a shortfall-power, which is a difference between the load power and the generation power, by discharging the storage battery **4**.

In the grid independent operation, when the remaining battery level of the storage battery **4** monitored by the remaining level monitor **59** is the upper limit value or more, the charging-discharging power conditioner **5** controls so as to turn off the generator side switch **112** by supplying a control signal to disconnect the generator power conditioner **3** from the feed line **13**. The generation power which is the output power of the generator power conditioner **3** to the feed line **13** is zero in this case, and thus all the load power is covered by the discharge power of the storage battery **4** by the charging-discharging power conditioner **5**. When the remaining battery level of the storage battery **4** decreases to less than the upper limit value due to the discharge thereof, the charging-discharging power conditioner **5** switches on the generator side switch **112** to restart and allow the generator power conditioner **3** to output electric power to the feed line **13**.

In the case of the power restoration of the power grid **6**, the charging-discharging power conditioner **5** stops outputting electric power to the feed line **13** in response to the detection result (power restoration) of the power restoration detector **113**, and as a result the generator power conditioner **3** stops outputting electric power to the feed line **13**. Then, the charging-discharging power conditioner **5** supplies the selector board **11** with a control signal to switch on the grid side switch **111**, thereby connecting the power grid **6** with the distribution board **12**. If the generator side switch **112** is switched off, the charging-discharging power conditioner **5** also restores the generator side switch **112** to ON state.

The charging-discharging power conditioner **5** is therefore switched into the grid connecting operation to start the constant voltage control so as to maintain the voltage (effective value) of the feed line **13** at constant, thereby supplying the feed line **13** with AC power having the substantially same frequency and amplitude as those of the power grid **6**. The generator power conditioner **3** then starts operating in the grid-connection operation mode (in which the generator power conditioner **3** outputs electric power through the first output terminal **31**) as similar to the grid independent operation, with a voltage supplied from the power grid **6** to the feed line **13** referred to as a reference voltage, thereby outputting electric power to the feed line **13** under the MPPT control.

As described above, the configuration of the embodiment is switched between the grid connecting operation and the grid independent operation by the selector board **11**. The controller **35** of the generator power conditioner **3** can be operated only in the grid-connection operation mode (in which the generator power conditioner **3** outputs electric power through the first output terminal **31**) regardless of the grid connecting operation or the grid independent operation. Power conditioners on the market are generally configured to: perform the MPPT control in a grid-connection operation mode; and perform the constant voltage control for maintaining the output voltage at a predetermined target value in an autonomous operation mode (in which the generator power conditioner **3** outputs electric power through the second output terminal **32**) in order to supply a sufficient voltage for operating a load. Therefore, according to the configuration of the embodiment, these general power conditioners on the market can be used for the generator power conditioner **3** in the power supply system **1**. In detail, the generator power conditioner **3** always operates in the grid-connection operation mode in the embodiment, and accordingly the generator power conditioner **3** can always perform the MPPT control regardless of the fact that the connection selector **10** switches the generator power conditioner **3** between the grid connecting operation and the grid independent operation. Thus, it is possible to cause a power conditioner to always perform the MPPT control, regardless of the fact that the power conditioner has both of the output terminal (the first output terminal **31**) for MPPT control and the output terminal (the second output terminal **32**) for constant voltage control.

In the grid independent operation, the charging-discharging power conditioner **5** stops the generator power conditioner **3** outputting electric power to the feed line **13** when the remaining battery level of the storage battery **4** is the upper limit value or more. Accordingly, it is possible to prevent overcharge of the storage battery **4**. In other words, the generator power conditioner **3** stops outputting electric power to the feed line **13** when the storage battery **4** is fully charged, and therefore the charging-discharging power conditioner **5** can prevent a fully-charged storage battery **4** from further charging by a surplus power.

Note that the charging-discharging power conditioner **5** in each of the first and second embodiments may also be configured, as similar to the embodiment, to stop the generator power conditioner **3** outputting electric power to a grid independent feed line when a remaining battery level of the storage battery **4** is a predetermined upper limit value or more in the grid independent operation.

In an applied example to the first embodiment, the controller **35** of the generator power conditioner **3** and the controller **55** of the charging-discharging power conditioner **5** are configured to communicate with each other. The charging-discharging power conditioner **5** is provided with a remaining level monitor **59** configured to monitor a remaining battery level of the storage battery **4**. The controller **55** of the charging-discharging power conditioner **5** is configured to, when the remaining battery level of the storage battery **4** is an upper limit value or more in the grid independent operation, switch off the first switch **36** and the second switch **37** of the generator power conditioner **3** via the controller **35**, thereby stopping the generator power conditioner **3** outputting electric power to a feed line (the grid-connected feed line **7** and the grid-independent feed line **8**).

In an applied example to the second embodiment, the charging-discharging power conditioner **5** is provided with a remaining level monitor **59** configured to monitor a remaining battery level of the storage battery **4**. The controller **55** of the charging-discharging power conditioner **5** is configured to, when the remaining battery level of the storage battery **4** is an upper limit value or more in the grid independent operation, switch off the first connection switch **101** and the second connection switch **102**, thereby stopping the generator power conditioner **3** outputting electric power to a feed line (the grid-connected feed line **7** and the grid-independent feed line **8**).

The power supply system **1** may include a plurality of generator power conditioner **3**, instead of including a single generator power conditioner **3**. In this configuration, power generators connected to the generator power conditioners **3** are not limited to solar batteries **2**, and at least one of the power generators may be other generators than the solar batteries **2**, such as fuel cells or the like. In the example where the system includes the plurality of the generator power conditioners **3**, generator side switches **112** are each provided for the generator power conditioners **3**, and the charging-discharging power conditioner **5** switches off all the generator side switches **112** when the remaining battery level of the storage battery **4** is a predetermined upper limit value or more in the grid independent operation.

In the example where the system includes the plurality of generator power conditioners **3**, it is preferable that the storage battery **4** has a maximum permissible power for charging which is equal to or more than sum of the maximum values of the output power from the generator power conditioners **3** to the feed line **13** (generation power). With such the storage battery **4**, as long as the storage battery **4** is not fully charged, the generation power can be supplied to charge the storage battery **4** by the charging-discharging power conditioner **5** in the grid independent operation even in a case where the consumed power in the load **9** (load power) is zero.

In the power supply system **1**, the grid side switch **111** and the generator side switch **112** are not necessarily housed in the selector board **11** as in the described configuration, and they may be prepared as individual switches. The grid side switch **111** and the generator side switch **112** may be provided in the distribution board **12**. In this configuration, the power grid **6**, the generator power conditioner **3** and the charging-discharging power conditioner **5** are directly connected to the feed line **13** to which the distribution board **12** is connected.

The charging-discharging power conditioner **5** in the embodiment is configured to detect the power outage (failure in the power grid **6**) by the built-in power-outage detector and to detect the power restoration by the power restoration detector **113** provided outside thereof, but is not limited to this configuration. For example, the charging-discharging power conditioner **5** may be configured to detect both the power outage and the power restoration by the power restoration detector **113** provided outside.

Other configurations and functions of the embodiment are analogous to those in the second embodiment.

### (Fourth Embodiment)

A power supply system **1** of the embodiment differs from the power supply system **1** according to the first embodiment in that a generator power conditioner **3** performs a constant voltage control so as to maintain an output voltage of the second output terminal **32** at constant in a grid independent operation. Like kind elements are assigned the same reference numerals as depicted in the first embodiment and explanation is omitted as needed.

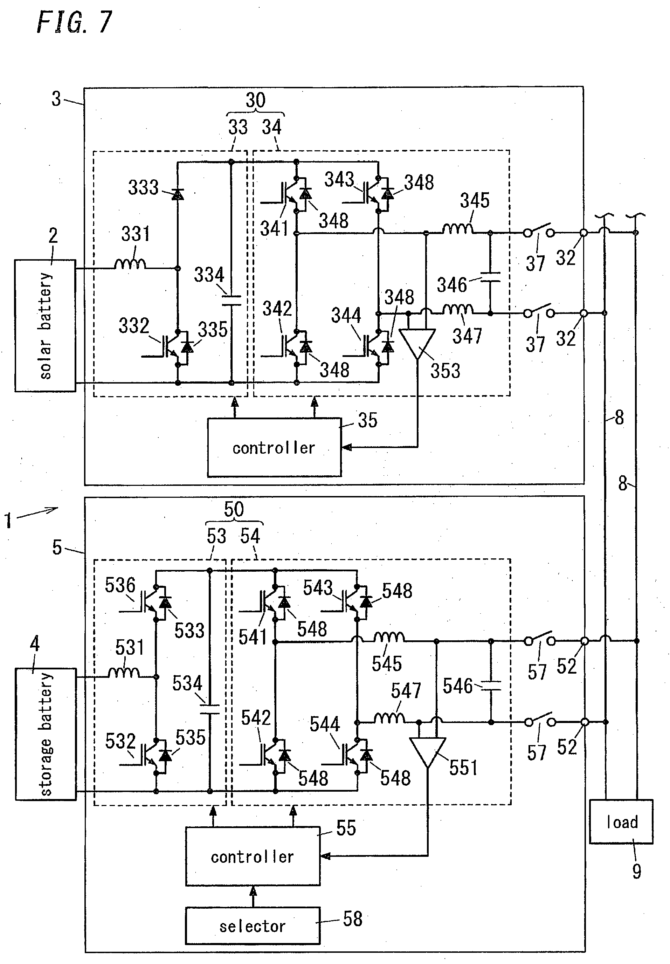

As shown in FIG. 7, the generator power conditioner **3** of the embodiment includes a voltage sensor **353** configured to sense a voltage of the second output terminal **32**, and an output of the voltage sensor **353** is supplied to a controller **35**. In the example of FIG. 7, the voltage sensor **353** senses a voltage between a junction of switching devices **341** and **342** and a junction of switching devices **343** and **344** of a DC/AC converter **34.**

The controller **35** of the generator power conditioner 3 is configured to control a power converter **30** (i.e., a DC/DC converter **33** and the DC/AC converter **34**) based on the sensing result of the voltage sensor **353** to achieve the constant voltage control for maintaining the voltage of the second output terminal **32** at constant. In detail, the controller **35** is configured to control the power converter **30** so as to increase the output power of the power converter **30** when the sensed voltage is smaller than a predetermined target value and also to decrease the output power thereof when the sensed voltage is greater than the target value, thereby maintaining the sensed voltage by the voltage sensor **353** at the target value.

The generator power conditioner **3** further includes a voltage sensor **351** and a current sensor **352** (although not shown in FIG. 7) described in the first embodiment, and performs an MPPT control in a grid connecting operation.

A charging-discharging power conditioner **5** of the embodiment is configured to perform a constant voltage control so as to maintain a voltage (effective value) of a grid-independent feed line **8** at constant in a grid independent operation by switching the charge and the discharge of a storage battery **4**, as similar to that in the first embodiment. Note that a target value (hereinafter, referred to as "a second target value") for the constant voltage control of the charging-discharging power conditioner **5** is set smaller than a target value (hereinafter, referred to as "a first target value") for the constant voltage control of the generator power conditioner **3** (i.e., the second target value < the first target value).

Described is an operation of the power supply system **1** according to the embodiment when a power grid **6** is in failure (i.e., in the grid independent operation).

When detecting a failure in the power grid **6**, the generator power conditioner **3** and the charging-discharging power conditioner **5** switch on respective second switches **37** and **57** to be connected with each other through the grid-independent feed line **8**, thereby automatically operating in the grid independent operation. In this state, the generator power conditioner **3** performs the constant voltage control so as to maintain the output power from a second output terminal **32** at the first target value, and the charging-discharging power conditioner **5** performs the constant voltage control so as to maintain the voltage of the grid-independent feed line **8** at the second target value.

In a case where the output power from the generator power conditioner **3** to the grid-independent feed line **8** (refereed to as "generation power") is greater than a consumed power in a load(s) **9** connected to the grid-independent feed line **8** (referred to as "load power"), the load power can be entirely covered by the generation power. In this case, the generator power conditioner **3** performs the constant voltage control to thereby maintain the voltage of the grid-independent feed line **8** at the first target value, and as a result a sensed voltage by a voltage sensor **551** of the charging-discharging power conditioner **5** is to be greater than the second target value (< the first target value).

In this case, the charging-discharging power conditioner **5** operates the charge-discharge circuit **50** in a charge mode so as to convert AC power supplied through the grid-independent feed line **8** into DC power to supply the DC power to the storage battery **4**, thereby charging the storage battery **4.** In the embodiment, the charging-discharging power conditioner **5** is configured to adjust the magnitude of the output power in accordance with a difference between the second target value and the sensed voltage by the voltage sensor **551** so that the output power to the storage battery **4** increases with increase in the difference between the second target value and the sensed voltage.

In a case where the generation power is smaller than the load power, the generator power conditioner **3** attempts to perform the constant voltage control but cannot maintain the voltage of the grid-independent feed line **8** at the first target value due to the consumed power being too large, and accordingly the voltage of the grid-independent feed line **8** decreases below the first target value. When the sensed voltage by the voltage sensor **551** decreases to less than the second target value, the charging-discharging power conditioner **5** operates the charge-discharge circuit **50** in a discharge mode to discharge the storage battery **4** and to convert DC power supplied from the storage battery **4** into AC power to supply the AC power to the grid-independent feed line **8**. In the embodiment, the charging-discharging power conditioner **5** is configured to adjust the magnitude of the output power in accordance with a difference between the second target value and the sensed voltage by the voltage sensor **551** so that the output power to the grid-independent feed line **8** increases with increase in the difference between the second target value and the sensed voltage.

In a case where the sensed voltage by the voltage sensor **551** corresponds to the second target value, the charging-discharging power conditioner **5** causes the charge-discharge circuit **50** to stop so as to stop charging and discharging of the storage battery **4**.

As a result, in the power supply system **1** of the embodiment, the charging-discharging power conditioner **5** charges, in principle, the storage battery **4** when the power grid **6** is in failure, provided that the solar battery **2** can generate sufficient electric power because the second target value is set smaller than the first target value. In addition, even when the generated power of the solar battery **2** is lowered less than the consumed power of the load **9** due to decreased solar radiation or a load **9** having a large power consumption, it is possible to stably supply electric power to the load **9** by discharging the storage battery **4** by the charging-discharging power conditioner **5**.

The charging-discharging power conditioner 5 may have a second target value having a certain range, such as "97 V ± 2 V". In this configuration, the charging-discharging power conditioner **5** operates the charge-discharge circuit **50** in the charge mode when the sensed voltage is greater than an upper limit (99 V, in this example) of the second target value, and operates the charge-discharge circuit **50** in the discharge mode when the sensed voltage is smaller than a lower limit (95 V, in this example) of the second target value. The charging-discharging power conditioner **5** causes the charge-discharge circuit **50** to stop when the sensed voltage is within the upper limit and the lower limit of the second target value. Note that the upper limit of the second target value in this example should be set smaller than the first target value (e.g., 100 V).

According to the above described power supply system **1**, the charging-discharging power conditioner **5** charges, in principle, the storage battery **4** in the grid independent operation provided that the solar battery **2** can generate sufficient electric power because the second target value is set smaller than the first target value. As a result, the charging-discharging power conditioner **5** can supply electric power to the load **9** by the stored energy in the storage battery **4** even when the consumed power of the load **9** exceeds the generating power of the solar battery **2**. Accordingly, a load **9** having power consumption larger than a maximum output power of the generator power conditioner **3** can be powered even in the grid independent operation, and it is possible to increase the degrees of freedom of choice of loads. In addition, even when the generating power of the solar battery **2** decreases to less than the consumed power of the load **9** due to decreased solar radiation or a load **9** with a large power consumption, it is possible to continue supplying electric power to the load **9** by the charging-discharging power conditioner **5**. Thus, it is possible to stably supply electric power to the load **9**.

Note that power conditioners on the market are generally configured: to perform the MPPT control in an operation mode in which the conditioner outputs electric power through a first output terminal; and to perform the constant voltage control so as to maintain the output voltage at a predetermined target value in an operation mode in which the conditioner outputs electric power through a second output terminal in order to ensure a sufficient voltage for operating a load. Therefore, according to the power supply system **1** of the embodiment, it is possible to use the power conditioners on the market for the generator power conditioner **3** of the power supply system **1.** In short, the power supply system **1** according to the embodiment can be achieved by adding the storage battery **4** and the charging-discharging power conditioner **5** to an existing power supply system that includes a general power conditioner as the generator power conditioner.

Note that the charging-discharging power conditioner **5** of the embodiments may also be configured to stop the generator power conditioner **3** outputting electric power to a grid independent feed line when a remaining battery level of the storage battery **4** is a predetermined upper limit value or more in the grid independent operation. In an applied example, the controller **35** of the generator power conditioner **3** and the controller **55** of the charging-discharging power conditioner **5** are configured to communicate with each other. The charging-discharging power conditioner **5** is provided with a remaining level monitor **59** configured to monitor a remaining battery level of the storage battery **4**. The controller **55** of the charging-discharging power conditioner **5** is configured to, when the remaining battery level of the storage battery **4** is an upper limit value or more in the grid independent operation, switch off the first switch **36** and the second switch **37** of the generator power conditioner **3** via the controller **35**, thereby stopping the generator power conditioner **3** outputting electric power to a feed line (the grid-connected feed line **7** and the grid-independent feed line **8**).

Other configurations and functions of the embodiment are analogous to those in the first embodiment.

Incidentally, the constructions of charging-discharging power conditioner **5** in the first to third embodiment and that in the fourth embodiment are the same, although the generator power conditioners **3** in the first to third embodiments perform the MPPT control in the grid independent operation and (on the other hand) the generator power conditioner **3** in the fourth embodiment performs the constant voltage control in the grid independent operation. However, it is notable that, in the fourth embodiment, the target value (the second target value) for the constant voltage control of the charging-discharging power conditioner **5** should be set smaller than the target value (the first target value) for the constant voltage control of the generator power conditioner **3**.

In view of the above circumstance, the charging-discharging power conditioner **5** preferably includes: an operator (not shown) formed of such as a DIP switch; and a selector **58** (see FIG. 7) configured to switch a setting value of the target value in accordance with an operation of the operator, so that the target value can be changed in accordance with the operator. With this configuration, the charging-discharging power conditioner **5** can be operated together with any of the generator power conditioners **3** by changing the target value depending on the type of the generator power conditioner **3**. In detail, when the target value of the charging-discharging power conditioner **5** is set to a first setting value which is predetermined according to a load **9**, the charging-discharging power conditioner **5** can cooperate with such the generator power conditioner **3** that is configured to perform the MPPT control in the grid independent operation for forming a power supply system **1**. On the other hand, when the target value of the charging-discharging power conditioner **5** is set to a second setting value (second target value) which is smaller than the first target value, the charging-discharging power conditioner **5** can cooperates with such the generator power conditioner **3** that is configured to perform the constant voltage control in the grid independent operation for forming a power supply system **1**.

The selector **58** may be configured to automatically select the target value in accordance with an output from the generator power conditioner **3** to the grid-independent feed line **8** when the grid independent operation is started. In detail, the charging-discharging power conditioner **5** may include a detector (not shown) configured to detect a voltage of a junction of the second switch **57** and the second output terminal **52**; and judge a control scheme of the generator power conditioner **3** in accordance with a detected voltage (detected result) by the detector when the grid independent operation is started. Note that the selector **58** may be configured to determine that the control scheme of the generator power conditioner **3** is: the constant voltage control if the detector detects a presence of a voltage under a condition where the second switch **57** is switched off (opened) when the grid independent operation is started; and the MPPT control if the detector does not detect the voltage under this condition.

For performing the MPPT control, the generator power conditioner **3** needs to be configured to gradually increase the applying voltage on the grid-independent feed line **8** when the grid independent operation is started, because the generator power conditioner **3** needs to search the optimum point (maximum power point). On the other hand, for performing the constant voltage control, the generator power conditioner **3** applies a predetermined voltage (the first target value) on the grid-independent feed line **8** even when the grid independent operation is started. Therefore, the control scheme of the generator power conditioner **3** can be judged by a presence or an absence of a voltage applied on the grid-independent feed line **8** from the generator power conditioner **3** when the grid independent operation is started.

## Claims

1. A power supply system (1) comprising:
a generator power conditioner (3) configured to switch between a grid connecting operation and a grid independent operation, the generator power conditioner (3) being configured to carry out power conversion of a solar battery (2) and to coordinate with a power grid (6) in the grid connecting operation, the generator power conditioner (3) being configured to be disconnected from the power grid (6) in the grid independent operation; and
a charging-discharging power conditioner (5) connected to a grid-independent feed line (8) which serves as a power supply line for the generator power conditioner (3) in the grid independent operation,
**characterized in that** the charging-discharging power conditioner (5) comprises:
a charge-discharge circuit (50) configured to charge and discharge a storage battery (4);
a voltage sensor (551) configured to sense a voltage of the grid-independent feed line (8); and
a controller (55) configured to control the charge-discharge circuit (50) so as to maintain a voltage of the grid-independent feed line (8) sensed as a sensed voltage by the voltage sensor (551) at a predetermined target value in the grid independent operation by switching the charge and discharge of the storage battery (4), and
wherein the controller (55) is configured to control the charge-discharge circuit (50) to: charge the storage battery (4) by electric power supplied through the grid-independent feed line (8) when the sensed voltage is greater than the target value; and supply electric power from the storage battery (4) to the grid-independent feed line (8) when the sensed voltage is smaller than the target value.

2. The power supply system according to claim 1, wherein the generator power conditioner (3) is configured to perform, in the grid independent operation, a maximum power point tracking control so as to maximize output power of the solar battery (2).

3. The power supply system according to claim 1,
wherein the generator power conditioner (3) is configured to perform, in the grid independent operation, a constant voltage control so as to maintain an output voltage thereof to the grid-independent feed line (8) at a first target value,
wherein the charging-discharging power conditioner (5) is configured to control the charge-discharge circuit (50) so as to maintain the sensed voltage by the voltage sensor (551) at a second target value as the target value, and
wherein the second target value is set smaller than the first target value.

4. The power supply system according to any one of claims 1 to 3,
wherein the target value has a predetermined range, and
wherein the controller (55) is configured to control the charge-discharge circuit (50) to: charge the storage battery (4) by electric power supplied through the grid-independent feed line (8) when the sensed voltage is greater than an upper limit of the target value; supply electric power from the storage battery (4) to the grid-independent feed line (8) when the sensed voltage is smaller than a lower limit of the target value; and cause the charge-discharge circuit (50) to stop when the sensed voltage is within the upper limit and the lower limit of the target value.

5. The power supply system according to any one of claims 1 to 4, wherein the charging-discharging power conditioner (5) is configured to stop the generator power conditioner (3) outputting electric power to the grid-independent feed line (8) when a remaining battery level of the storage battery (4) is a predetermined upper limit value or more in the grid independent operation.

6. The power supply system according to any one of claims 1 to 5, wherein the charging-discharging power conditioner (5) further comprises a selector (58) configured to switch the target value between a first setting value and a second setting value.

7. The power supply system according to claim 6, wherein the selector (58) is configured to automatically switch the target value between the first setting value and the second setting value in accordance with an output from the generator power conditioner (3) to the grid-independent feed line (8) in a starting time of the grid independent operation.

8. A charging-discharging power conditioner (5), adapted to be connected to a grid-independent feed line (8) which is configured to be connected to a generator power conditioner (3) configured to switch between a grid connecting operation in which the generator power conditioner (3) carries out power conversion of a solar battery (2) to coordinate with a power grid (6) and a grid independent operation in which the generator power conditioner (3) is disconnected from the power grid (6), and which serves as a power supply line for the generator power conditioner (3) in the grid independent operation, the charging-discharging power conditioner (5) is **characterized by** comprising:
a charge-discharge circuit (50) configured to charge and discharge a storage battery (4);
a voltage sensor (551) configured to sense a voltage of the grid-independent feed line (8); and
a controller (55) configured to control the charge-discharge circuit (50) so as to maintain a voltage of the grid-independent feed line (8) sensed as a sensed voltage by the voltage sensor (551) at a predetermined target value in the grid independent operation by switching the charge and discharge of the storage battery (4),
wherein the controller (55) is configured to control the charge-discharge circuit (50) to: charge the storage battery (4) by electric power supplied through the grid-independent feed line (8) when the sensed voltage is greater than the target value; and supply electric power from the storage battery (4) to the grid-independent feed line (8) when the sensed voltage is smaller than the target value.

9. The charging-discharging power conditioner according to claim 8, further comprising a selector (58) configured to switch the target value between a first setting value and a second setting value,
wherein the selector (58) is configured to automatically switch the target value between the first setting value and the second setting value in accordance with an output from the generator power conditioner (3) to the grid-independent feed line (8) in a starting time of the grid independent operation.

## Patentansprüche

1. Stromversorgungssystem (1), umfassend:
einen Erzeuger-Strom-Konditionierer (3), der zum Schalten zwischen einem Netz-Verbindungs-Betrieb und einem netzunabhängigen Betrieb ausgebildet ist, wobei der Erzeuger-Strom-Konditionierer (3) ausgebildet ist, um im Netz-Verbindungs-Betrieb Stromwandlung einer Solarbatterie (2) auszuführen und sich mit einem Stromnetz (6) abzustimmen, wobei der Erzeuger-Strom-Konditionierer (3) ausgebildet ist, um im netzunabhängigen Betrieb nicht mit dem Stromnetz (6) verbunden zu sein; und
einen Lade-Entlade-Strom-Konditionierer (5), der mit einer netzunabhängigen Versorgungsleitung (8) verbunden ist, die als Stromversorgungsleitung für den Erzeuger-Strom-Konditionierer (3) im netzunabhängigen Betrieb dient,
**dadurch gekennzeichnet dass** der Lade-Entlade-Strom-Konditionierer (5) umfasst:
eine Lade-Entlade-Schaltung (50), die zum Laden und Entladen einer Speicherbatterie (4) ausgebildet ist;
einen Spannungssensor (551), der zum Aufnehmen einer Spannung der netzunabhängigen Versorgungsleitung (8) ausgebildet ist; und
eine Steuerung (55), die ausgebildet ist, um die Lade-Entlade-Schaltung (50) so zu steuern, dass eine Spannung der netzunabhängigen Versorgungsleitung (8), aufgenommen vom Spannungssensor (551) als eine Aufnahmespannung, im netzunabhängigen Betrieb durch Schalten des Ladens und Entladens der Speicherbatterie (4) bei einem vorbestimmten Zielwert gehalten wird, und
wobei die Steuerung (55) ausgebildet ist, um die Lade-Entlade-Schaltung (50) so zu steuern, dass diese: die Speicherbatterie (4) mit elektrischen Strom lädt, der von der netzunabhängigen Versorgungsleitung (8) bereitgestellt wird, wenn die aufgenommene Spannung größer als der Zielwert ist; und elektrischen Strom von der Speicherbatterie (4) für die netzunabhängige Versorgungsleitung (8) bereitstellt, wenn die aufgenommene Spannung kleiner als der Zielwert ist.

2. Stromversorgungssystem nach Anspruch 1, wobei der Erzeuger-Strom-Konditionierer (3) ausgebildet ist, um im netzunabhängigen Betrieb eine Maximum-Energie-Punkt-Verfolgungs-Steuerung durchzuführen, um Ausgangsenergie ("output power") der Solarbatterie (3) zu maximieren.

3. Stromversorgungssystem nach Anspruch 1,
wobei der Erzeuger-Strom-Konditionierer (3) ausgebildet ist, um im netzunabhängigen Betrieb eine Konstante-Spannung-Steuerung durchzuführen, um so seine Ausgangsspannung für die netzunabhängige Versorgungsleitung (8) bei einem ersten Zielwert zu halten,
wobei der Lade-Entlade-Strom-Konditionierer (5) ausgebildet ist, um die Lade-Entlade-Schaltung (50) so zu steuern, dass die durch den Spannungssensor (551) aufgenommene Spannung bei einem zweiten Zielwert als dem Zielwert gehalten wird, und
wobei der zweite Zielwert kleiner als der erste Zielwert eingestellt ist.

4. Stromversorgungssystem nach einem der Ansprüche 1 bis 3,
wobei der Zielwert einen vorgegebenen Bereich hat, und
wobei die Steuerung (55) ausgebildet ist, um die Lade-Entlade-Schaltung (50) so zu steuern, dass diese: die Speicherbatterie (4) mit elektrischem Strom lädt, der von der netzunabhängigen Versorgungsleitung (8) bereitgestellt wird, wenn die aufgenommene Spannung größer als eine obere Grenze des Zielwertes ist; elektrischen Strom von der Speicherbatterie (4) für die netzunabhängige Versorgungsleitung (8) bereitstellt, wenn die aufgenommene Spannung kleiner als eine untere Grenze des Zielwertes ist; und die Lade-Entlade-Schaltung (50) veranlasst zu stoppen, wenn die aufgenommene Spannung zwischen der oberen Grenze und der unteren Grenze des Zielwertes ist.

5. Stromversorgungssystem nach einem der Ansprüche 1 bis 4,
wobei der Lade-Entlade-Strom-Konditionierer (5) ausgebildet ist, um den Erzeuger-Strom-Konditionierer (3) darin zu stoppen, elektrischen Strom an die netzunabhängige Versorgungsleitung (8) auszugeben, wenn im netzunabhängigen Betrieb ein verbleibender Batteriepegel der Speicherbatterie (4) ein vorbestimmter oberer Grenzwert oder mehr ist.

6. Stromversorgungssystem nach einem der Ansprüche 1 bis 5,
wobei der Lade-Entlade-Strom-Konditionierer (5) weiterhin einen Selektor (58) umfasst, der ausgebildet ist, um den Zielwert zwischen einem ersten Einstellwert und einem zweiten Einstellwert zu schalten.

7. Stromversorgungssystem nach Anspruch 6, wobei der Selektor (58) ausgebildet ist, um den Zielwert zwischen dem ersten Einstellwert und dem zweiten Einstellwert automatisch gemäß einer Ausgabe des Erzeuger-Strom-Konditionierers (3) an die netzunabhängige Versorgungsleitung (8) während einer Startzeit des netzunabhängigen Betriebs zu schalten.

8. Lade-Entlade-Strom-Konditionierer (5), angepasst um mit einer netzunabhängigen Versorgungsleitung (8) verbunden zu werden, die ausgebildet ist, um mit einem Erzeuger-Strom-Konditionierer (3) verbunden zu werden, der ausgebildet ist, zwischen einem Netz-Verbindungs-Betrieb, bei dem der Erzeuger-Strom-Konditionierer (3) Stromwandlung einer Solarbatterie (2) zur Abstimmung mit einem Stromnetz (6) auszuführen, und einem netzunabhängigen Betrieb zu schalten, bei dem der Erzeuger-Strom-Konditionierer (3) vom Stromnetz (6) getrennt ist, und welche als eine Stromversorgungsleitung für den Erzeuger-Strom-Konditionierer (3) während des netzunabhängigen Betriebs dient, wobei der Lade-Entlade-Strom-Konditionierer (5) **dadurch gekennzeichnet ist, dass** er umfasst:
eine Lade-Entlade-Schaltung (50), die zum Laden und Entladen einer Speicherbatterie (4) ausgebildet ist;
einen Spannungssensor (551), der zum Aufnehmen einer Spannung der netzunabhängigen Versorgungsleitung (8) ausgebildet ist; und
eine Steuerung (55), die ausgebildet ist, um die Lade-Entlade-Schaltung (50) so zu steuern, dass eine Spannung der netzunabhängigen Versorgungsleitung (8), aufgenommen vom Spannungssensor (551) als eine Aufnahmespannung, im netzunabhängigen Betrieb durch Schalten des Ladens und Entladens der Speicherbatterie (4) bei einem vorbestimmten Zielwert gehalten wird,
wobei die Steuerung (55) ausgebildet ist, um die Lade-Entlade-Schaltung (50) so zu steuern, dass diese: die Speicherbatterie (4) mit elektrischen Strom lädt, der von der netzunabhängigen Versorgungsleitung (8) bereitgestellt wird, wenn die aufgenommene Spannung größer als der Zielwert ist; und elektrischen Strom von der Speicherbatterie (4) für die netzunabhängige Versorgungsleitung (8) bereitstellt, wenn die aufgenommene Spannung kleiner als der Zielwert ist.

9. Lade-Entlade-Strom-Konditionierer nach Anspruch 8,
weiterhin umfassend einen Selektor (58), der ausgebildet ist, um den Zielwert zwischen einem ersten Einstellwert und einem zweiten Einstellwert zu schalten,
wobei der Selektor (58) ausgebildet ist, um den Zielwert zwischen dem ersten Einstellwert und dem zweiten Einstellwert automatisch gemäß einer Ausgabe des Erzeuger-Strom-Konditionierers (3) an die netzunabhängige Versorgungsleitung (8) während einer Startzeit des netzunabhängigen Betriebs zu schalten.

## Revendications

1. Système d'alimentation en courant (1) comprenant :
un conditionneur de courant de générateur (3) configuré pour commuter entre une opération de connexion au réseau et une opération indépendante du réseau, le conditionneur de courant de générateur (3) étant configuré pour réaliser la conversion de courant d'une batterie solaire (2) et pour assurer la coordination avec un réseau électrique (6) dans l'opération de connexion au réseau, le conditionneur de courant de générateur (3) étant configuré pour être déconnecté du réseau électrique (6) dans l'opération indépendante du réseau ; et
un conditionneur de courant de charge-décharge (5) connecté à une ligne d'alimentation indépendante du réseau (8) qui sert de ligne d'alimentation en courant pour le conditionneur de courant de générateur (3) dans l'opération indépendante du réseau,
**caractérisé en ce que** le conditionneur de courant de charge-décharge (5) comprend :
un circuit de charge-décharge (50) configuré pour charger et décharger un accumulateur (4) ;
un capteur de tension (551) configuré pour détecter une tension de la ligne d'alimentation indépendante du réseau (8) ; et
un contrôleur (55) configuré pour contrôler le circuit de charge-décharge (50) de sorte à maintenir une tension de la ligne d'alimentation indépendante du réseau (8) détectée en tant que tension détectée par le capteur de tension (551) à une valeur cible prédéterminée dans l'opération indépendante du réseau en commutant la charge et la décharge de l'accumulateur (4), et
dans lequel le contrôleur (55) est configuré pour contrôler le circuit de charge-décharge (50) pour : charger l'accumulateur (4) à l'aide du courant électrique fourni par la ligne d'alimentation indépendante du réseau (8) lorsque la tension détectée est supérieure à la valeur cible ; et fournir le courant électrique provenant de l'accumulateur (4) à la ligne d'alimentation indépendante du réseau (8) lorsque la tension détectée est inférieure à la valeur cible.

2. Système d'alimentation en courant selon la revendication 1, dans lequel le conditionneur de courant de générateur (3) est configuré pour effectuer, dans l'opération indépendante du réseau, un contrôle de poursuite de point de puissance maximale afin de maximiser la puissance de sortie de la batterie solaire (2).

3. Système d'alimentation en courant selon la revendication 1,
dans lequel le conditionneur de courant de générateur (3) est configuré pour effectuer, dans l'opération indépendante du réseau, un contrôle de tension constant de manière à maintenir une tension de sortie de celui-ci sur la ligne d'alimentation indépendante du réseau (8) à une première valeur cible,
dans lequel le conditionneur de courant de charge-décharge (5) est configuré pour contrôler le circuit de charge-décharge (50) de sorte à maintenir la tension détectée par le capteur de tension (551) à une seconde valeur cible en tant que valeur cible, et
dans lequel la seconde valeur cible est fixée à une valeur inférieure à la première valeur cible.

4. Système d'alimentation en courant selon l'une quelconque des revendications 1 à 3,
dans lequel la valeur cible a une plage prédéterminée, et
dans lequel le contrôleur (55) est configuré pour contrôler le circuit de charge-décharge (50) pour : charger l'accumulateur (4) à l'aide du courant électrique fourni par la ligne d'alimentation indépendante du réseau (8) lorsque la tension détectée est supérieure à une limite supérieure de la valeur cible ; fournir le courant électrique provenant de l'accumulateur (4) à la ligne d'alimentation indépendante du réseau (8) lorsque la tension détectée est inférieure à une limite inférieure de la valeur cible ; et amener le circuit de charge-décharge (50) à s'arrêter lorsque la tension détectée est dans la limite supérieure et la limite inférieure de la valeur cible.

5. Système d'alimentation en courant selon l'une quelconque des revendications 1 à 4, dans lequel le conditionneur de courant de charge-décharge (5) est configuré pour arrêter la sortie de courant électrique par le conditionneur de courant de générateur (3) vers la ligne d'alimentation indépendante du réseau (8) lorsqu'un niveau de batterie résiduel de l'accumulateur (4) est supérieur ou égal à une valeur limite supérieure prédéterminée dans l'opération indépendante du réseau.

6. Système d'alimentation en courant selon l'une quelconque des revendications 1 à 5, dans lequel le conditionneur de courant de charge-décharge (5) comprend en outre un sélecteur (58) configuré pour faire commuter la valeur cible entre une première valeur de réglage et une seconde valeur de réglage.

7. Système d'alimentation en courant selon la revendication 6, dans lequel le sélecteur (58) est configuré pour commuter automatiquement la valeur cible entre la première valeur de réglage et la seconde valeur de réglage en fonction d'une sortie du conditionneur de courant de générateur (3) vers la ligne d'alimentation indépendante du réseau (8) à un moment de démarrage de l'opération indépendante du réseau.

8. Conditionneur de courant de charge-décharge (5), conçu pour être connecté à une ligne d'alimentation indépendante du réseau (8) qui est configurée pour être connectée à un conditionneur de courant de générateur (3) configuré pour commuter entre une opération de connexion de réseau dans laquelle le conditionneur de courant de générateur (3) réalise une conversion de courant d'une batterie solaire (2) pour la coordination avec un réseau électrique (6) et une opération indépendante du réseau dans laquelle le conditionneur de courant de générateur (3) est déconnecté du réseau électrique (6), et qui sert de ligne d'alimentation en courant pour le conditionneur de courant de générateur (3) dans l'opération indépendante du réseau, le conditionneur de courant de charge-décharge (5) est **caractérisé en ce qu'**il comprend :
un circuit de charge-décharge (50) configuré pour charger et décharger un accumulateur (4) ;
un capteur de tension (551) configuré pour détecter une tension de la ligne d'alimentation indépendante du réseau (8) ; et
un contrôleur (55) configuré pour contrôler le circuit de charge-décharge (50) de sorte à maintenir une tension de la ligne d'alimentation indépendante du réseau (8) détectée en tant que tension détectée par le capteur de tension (551) à une valeur cible prédéterminée dans l'opération indépendante du réseau en faisant commuter la charge et la décharge de l'accumulateur (4),
dans lequel le contrôleur (55) est configuré pour contrôler le circuit de charge-décharge (50) pour : charger l'accumulateur (4) à l'aide du courant électrique fourni par la ligne d'alimentation indépendante du réseau (8) lorsque la tension détectée est supérieure à la valeur cible ; et fournir le courant électrique provenant de l'accumulateur (4) à la ligne d'alimentation indépendante du réseau (8) lorsque la tension détectée est inférieure à la valeur cible.

9. Conditionneur de courant de charge-décharge selon la revendication 8, comprenant en outre un sélecteur (58) configuré pour commuter la valeur cible entre une première valeur de réglage et une seconde valeur de réglage,
dans lequel le sélecteur (58) est configuré pour faire commuter automatiquement la valeur cible entre la première valeur de réglage et la seconde valeur de réglage en fonction d'une sortie du conditionneur de courant de générateur (3) vers la ligne d'alimentation indépendante du réseau (8) à un moment de démarrage de l'opération indépendante du réseau.
